(19) Europäisches Patentamt / European Patent Office / Office européen des brevets

(11) **EP 4 335 828 B1**

(12) **EUROPÄISCHE PATENTSCHRIFT**

(45) Veröffentlichungstag und Bekanntmachung des Hinweises auf die Patenterteilung:
**12.02.2025 Patentblatt 2025/07**

(21) Anmeldenummer: **22195067.8**

(22) Anmeldetag: **12.09.2022**

(51) Internationale Patentklassifikation (IPC):
*C02F 1/461* (2023.01)    *B01D 61/42* (2006.01)
*B01D 69/06* (2006.01)    *B01D 71/02* (2006.01)
*C01D 15/02* (2006.01)    *C02F 1/469* (2023.01)
*C22B 26/12* (2006.01)    *C25B 1/04* (2021.01)
*C25B 1/16* (2006.01)    *C25B 9/19* (2021.01)
*C25B 9/23* (2021.01)    *C25B 11/00* (2021.01)
*C01D 15/08* (2006.01)    *C22B 3/22* (2006.01)
*C25B 13/05* (2021.01)    *C02F 1/38* (2023.01)
*C02F 1/44* (2023.01)    *C02F 1/52* (2023.01)
*C02F 101/10* (2006.01)    *C02F 103/08* (2006.01)
*C02F 103/16* (2006.01)

(52) Gemeinsame Patentklassifikation (CPC):
**C02F 1/4618; C01D 15/02; C01D 15/08;**
**C02F 1/4693; C22B 3/22; C22B 26/12; C25B 1/04;**
**C25B 1/16; C25B 9/19; C25B 13/05;** C02F 1/38;
C02F 1/444; C02F 1/52; C02F 2001/4619;
C02F 2101/10;                    (Forts.)

(54) **HERSTELLEN VON WASSERSTOFF UND LITHIUMHYDROXID IM BASISCHEN MILIEU**

PREPARATION OF HYDROGEN AND LITHIUM HYDROXIDE IN A BASIC MEDIUM

PRODUCTION D'HYDROGÈNE ET D'HYDROXYDE DE LITHIUM EN MILIEU BASIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.03.2024 Patentblatt 2024/11**

(73) Patentinhaber: **Evonik Operations GmbH**
**45128 Essen (DE)**

(72) Erfinder:
• HYING, Christian
  46414 Rhede (DE)
• GORMAN, Elisabeth
  45721 Haltern am See (DE)
• STENNER, Patrik
  63452 Hanau (DE)
• JURETZKA, Sabrina
  60599 Frankfurt am Main (DE)
• STADTMÜLLER, Tobias
  63500 Seligenstadt (DE)
• ARNDT, Sebastian
  63452 Hanau (DE)

• LÖFFLER, Frank
  64646 Heppenheim (DE)
• KLINK-TRAN, Huong
  68163 Mannheim (DE)
• ANTONI, Jessica
  61130 Nidderau (DE)
• DECKER Nicole
  44803 Bochum (DE)
• DAHLHUES, Meike
  45772 Marl (DE)

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
WO-A1-2022/157624    US-A1- 2012 103 826
US-A1- 2016 258 071

- **WU LEI ET AL: "Lithium recovery using electrochemical technologies: Advances and challenges", WATER RESEARCH, ELSEVIER, AMSTERDAM, NL, vol. 221, 5 July 2022 (2022-07-05), XP087141109, ISSN: 0043-1354, [retrieved on 20220705], DOI: 10.1016/ J.WATRES.2022.118822**

(52) Gemeinsame Patentklassifikation (CPC): (Forts.)
C02F 2103/08; C02F 2103/16; C02F 2201/46185

**Beschreibung**

Für die Herstellung von Lithiumionenbatterien (LIB) wird denknotwendig Lithium (Li) benötigt. Aufgrund seiner hohen Reaktivität kommt Lithium in der Natur nicht als Reinstoff, sondern stets gebunden vor. Als Ausgangstoff für die Herstellung von LIB wird das Lithium in der Regel in Form von Lithiumhydroxid (LiOH) oder von Lithiumcarbonat ($Li_2CO_3$) verwendet.

In den meisten natürlichen Lagerstätten ist Li in Form von Lithiumoxid (LizO) oder von Salzen wie Lithiumsulfat ($Li_2SO_4$) oder Lithiumchlorid (LiCl) vorhanden. Das Lithiumoxid ist Bestandteil von Erzen wie Pegmatit, wahrendessen Lithiumsulfat und Lithiumchlorid in den Laugen der Li-Salzseen gelöst sind. Im Zuge des bergmännischen Abbaus wird die jeweils gewonnene Lithiumverbindung in Lithiumcarbonat ($Li_2CO_3$) überführt. In einem weiteren Prozessschritt kann das Lithiumcarbonat mit Branntkalk oder Calciumhydroxid in Lithiumhydroxid umgesetzt werden. Die Gewinnung von Li und dessen Umwandung in LiOH ist beschrieben in:
Wietelmann, U. and Steinbild, M. (2014). Lithium and Lithium Compounds. In Ullmann's Encyclopedia of Industrial Chemistry, (Ed.). DOI: 10.1002/14356007.a15_393.pub2

Reiche Li-Lagerstätten sind bekannt, aber die Herstellung von LiOH aus den dort vorhandenen Li-Verbindungen ist sehr energieintensiv- und abwasserintensiv. Darüber hinaus besteht das strategisch begründete Bedürfnis, von den Eigentümern der Lagerstätte unabhängig zu sein.

Eine Lösung dieses Problems könnte darin bestehen, abgenutzte LIB stofflich aufzuarbeiten, sodass das darin enthaltene Lithium wieder als Rohstoff für Neubatterien verwendet werden kann.

Recyclingverfahren für LIB wurden in der Vergangenheit bereits zur technischen Reife entwickelt, jedoch meist mit dem Ziel auf die darin enthaltenen Metalle Fe, Ni, Mn, Co, Mg, Al. Das Alkalimetall Li wurde in der Regel nicht zurückgewonnen, weil es auf Grund seiner hohen Reaktivität nicht einfach aus dem Batterieschrott abzutrennen ist und es in ausreichender Menge kostengünstig aus natürlichen Lagerstätten verfügbar war. Die Gewinnung vom Li aus gebrauchten LIB erschien lange Zeit schlicht unwirtschaftlich.

Inzwischen ist der gesellschaftliche und wirtschaftliche Druck gestiegen, Lithium aus gebrauchten LIB zurückzugewinnen. Der Erfolg dieses Vorhabens setzt voraus, dass rezykliertes Li in einer für die Produzenten von LIB akzeptablen Qualität angeboten werden kann, sodass sich die Herstellungsprozesse für LIB aus Recycling-Li nicht von denen aus bergmännisch gewonnenen Frisch-Li unterscheiden. Die Batteriequalität darf selbstredend nicht leiden. Folglich muss rezykliertes Li, insbesondere in Form von LiOH, sehr anspruchsvolle Spezifikationen hinsichtlich Reinheit erfüllen. Darüber hinaus muss das Verfahren zur Rückgewinnung von Li aus Altbatterien möglichst energieeffizient sein. Ebenso sollte das Verfahren wenig Wasser verbrauchen.

Bekannte Verfahren zur Rückgewinnung von Lithium aus Altbatterien haben zusammengestellt:

Pankaj K. Choubey et al.: Advance review on the exploitation of the prominent energystorage element Lithium. Part II: From sea water and spent lithium ion batteries (LIBs), Minerals Engineering, Volume 110, 2017, Pages 104121 DOI: 10.1016/j.mineng. 2017.04.008.

Eine Technologie, die im vorstehenden Übersichtsartikel lediglich beiläufig als "LISM" erwähnt wird, ist die Elektrolyse von Li-haltigen Wässern in Gegenwart von so genannten LiSICon-Membranen.

LiSICon steht für Lithium Super Ionic Conductor. Es handelt sich dabei um eine Klasse aus anorganischem, (glas)keramischen Material, welches elektrisch isoliert, aber zugleich eine intrinsische Leitfähigkeit für Li-Ionen aufweist. Der Transportmechanismus für Li ist in der Kristallstruktur des Materials begründet. Die Li-Ionen werden - vereinfacht gesprochen - durch die Kristalle "durchgereicht". Kommerziell verfügbare LiSICon-Materialien sind unter anderem Lithium-Aluminium-Titanphosphat (LATP), Lithium-Aluminium-Titan-Siliciumphosphat (LATSP), Lithium-Aluminium-Germaniumphosphat (LAGP) und Lithium-Lanthan-Titanoxid (LLTO). Diese Materialien wurden ursprünglich als Festkörper-Elektrolyt für LIB entwickelt. Eine Übersicht zu den Transportmechanismen von LiSICons, deren Kristallstruktur und Herstellung bieten:

Palakkathodi Kammampata et al.: Cruising in ceramics-discovering new structures for all-solid-state batteries-fundamentals, materials, and performances. Ionics 24, 639-660 (2018) DOI: 10.1007/s11581-017-2372-7
Yedukondalu Meesala et al.: Recent Advancements in Li-lon Conductors for All-Solid-State Li-Ion Batteries. ACS Energy Lett. 2017, 2, 12, 2734-2751 DOI: 10.1021/acsenergylett.7b00849

Spezielle LiSICon Stöchiometrien werden beschrieben von:

Sofia Saffirio et al.Li1.4Al0.4Ge0.4Ti1.4(PO4)3 promising NASICON-structured glass-ceramic electrolyte for all-solid-state Li-based batteries: Unravelling the effect of diboron trioxide, Journal of the European Ceramic Society, Volume 42, Issue 3, 2022, Pages 1023-1032 DOI 10.1016/j.jeurceramsoc.2021.11.014.

Eongyu Yi et al. Materials that can replace liquid electrolytes in Li batteries: Superionic conductivities in Li1.7Al0.3Ti1.7Si0.4P2.6O12. Processing combustion synthesized nanopowders to free standing thin films. Journal of Power Sources, Volume 269,

2014, Pages 577-588, DOI 10.1016/j.jpowsour.2014.07.029.

Aufgrund ihrer selektiven Leitfähigkeit für Li-Ionen können LiSICon-Materialien als Membran zur Abtrennung von Li aus Li-haltigen Gemischen verwendet werden. Das Li muss in dem Gemisch in ionischer Form vorliegen, etwa als in Wasser gelöstes Li-Salz. Als treibende Kraft, um die Li-Ionen durch die LiSICon -Membran zu fördern, wird eine elektrische Spannung benötigt. Hierfür wird eine elektrochemische Zelle aufgebaut, die zwei Elektroden und eine LiSICon-Membran umfasst, welche die Zelle in zwei Kompartimente aufteilt. In jedem Kompartiment befindet sich eine Elektrode. Abhängig von der Polarität der im Kompartiment enthaltenen Elektrode werden die Kompartimente als anodisch oder kathodisch bezeichnet. An den Elektroden wird eine elektrische Spannung angelegt und das Li-haltige Wasser in das anionische Kompartiment eingefüllt. Das kathodische Kompartiment wird mit Wasser gefüllt. Die Membran reicht die Li-Kationen zu der Kathode durch. Das Wasser in dem kathodischen Kompartiment wird daher mit Li angereichert, während das Wasser auf der anodischen Seite um Li abgereichert wird. Ein solcher Vorgang wird Membranelektrolyse genannt.

Membranelektrolytische Verfahren zur Gewinnung von Lithium mit Hilfe von LiSICon Membranen sind bereits im Stand der Technik beschrieben.

So beschreiben Zhen Li et al. ein Verfahren, bei dem als Rohstoff das schwach Lithium-haltige Wasser des Roten Meeres verwendet wird:

Zhen Li et al.: Continuous electrical pumping membrane process for seawater lithium mining. Energy Environ. Sci., 2021, 14, 3152 DOI: 10.1039/d1ee00354b

Die Arbeitsgruppe um Zhen Li verwenden LLTO als Membran. Das abgetrennte Zielprodukt ist Lithiumphosphat ($Li_3PO_4$), was für die Produktion von Lithium-Eisen-Phosphat (LFP) Batterien in Betracht kommt. LIB mit einem anderen Kathodenmaterial wie beispielsweise Nickel-Mangan-Cobalt (NMC) oder Lithium-Mangan-Oxid (NMO) können damit nicht direkt hergestellt werden.

Mithilfe von Solarstrom, einer LAGP Membran und einer Kupferfolie wollen Yang et al. metallisches Lithium direkt aus Meerwasser gewinnen:

Sixie Yang et al.: Lithium Metal Extraction from Seawater. Joule, Volume 2, Issue 9, 2018, Pages 1648-1651, DOI 10.1016/j.joule.2018.07.006.

US 2016/0201163 A1 beschreibt die Abtrennung von Li Ionen aus einer Sole wie Meerwasser mit Hilfe von LiSICon Membranen. Als Membranmaterialien werden konkret $Li_3N$, $Li_{10}GeP_2S_{12}$ und $La_xLi_yTiO_2$, $Li_{1+x+y}Al_x(Ti, Ge)_{2-x}Si_yP_{3-y}O_{12}$ vorgeschlagen. Zielprodukt ist Lithiumcarbonat ($Li_2CO_3$).

Auch die WO 2019055730 A1 beschäftigt sich mit der Abtrennung von Lithium mit Hilfe von LiSICon-Membranen. Konkret werden LLTO oder LAGP oder LATP genannt. Das LiSICon-Material kann auf eine Stützstruktur aufgetragen sein. Die chemische Natur der Stützstruktur wird nicht näher beschrieben. Ebenso wenig wird beschrieben, wie das Auftragen von LiSICon auf die Stützstruktur geschehen soll. Das abgetrennte Zielprodukt sind Li-Ionen.

Aus der US9222148B2 ist es bekannt, Lithium-Hydroxid durch Membranelektrolyse an einer LiSICon Membran abzutrennen und sodann Lithiumhydroxid-Hydrat auszufällen.

Neben der Verwendung von keramischen LiSICon Membranen sind auch elektrolytische Verfahren zur Abtrennung von Lithium bekannt, die mit organischen Ionenaustauschmembranen arbeiten.

So beschreibt die EP 3805428 A1 die elektrolytische Herstellung von Lithiumhydroxid. Neben der Elektrolyse wird eine elektrochemische Umsetzung des Lithiums zu Lithiumhydroxid betrieben. Zur Gewinnung der notwendigen Edukte wird gleichzeitig Wasser elektrochemisch gespalten. Hierzu wird eine bipolare Dreikammerzelle mit einer Ionenaustauschmembran verwendet. Es werden die kommerziellen Ionenaustauschmebranen Asahi® AVV, Nation® 902, Fumatech® FAB, Fumatech® FKB und Neosepta® CMB verwendet. Die chemische Natur dieser Ionenaustauschmembranen ist in EP 3805428 A1 nicht offengelegt, aber es ist überwiegend wahrscheinlich, dass es sich dabei um organische Membranmaterialien handelt. Die Dreikammerzelle arbeitet im sauren Milieu. Als Feed wird Wasser enthaltend Li-Salze wie insbesondere Lithiumsulfat ($Li_2SO_4$) oder Lithiumchlorid (LiCl) eingesetzt.

Aus die US2012/103826 ist ein alternatives Verfahren zur Herstellung von Lithium-Hydroxid bekannt,

Eine zweitstufige elektrodialytische/elektrolytische Herstellung von Lithiumhydroxid aus wässrigem Lithiumsufat und/oder Lithiumbisulfat bei gleichzeitiger Wasserspaltung offenbart US 10036094 B2. In einer ersten Stufe wird eine elektrochemische Zelle mit zwei Kompartimenten eingesetzt, in der zweiten Stufe eine Dreikammerzelle. In der Dreikammerzelle kann ein pH von 8 bis 10 herrschen. Die Zellen sind mit Ionenaustauschmembranen ausgestattet. Die chemische Zusammensetzung der Membranen ist nicht gegeben. Die folgenden kommerziellen Membranen werden erwähnt: Fumatech® FAB, Astom® ACM, Asahi® MV, Nation® 324 oder Astom® AHA.

Ein prinzipieller Nachteil von Polymermembranen ist ihre Wasserdurchlässigkeit. Dadurch wird der Anolyt mit Wasser aus dem Katholyt verdünnt. Außerdem sind organische Ionenaustauschmembranen weniger ionenselektiv als anorganische LiSICon-Materialien: Sie lassen nicht nur Li⁺, sondern auch Na⁺ passieren, sodass die Stoffreinheit des Zielproduktes beeinträchtigt wird, sobald sich im Feed auch Na befindet. Neben der Reinheit des Zielprodukts leidet auch die Stromeffizienz des Prozesses: Die wertvolle elektrische Energie wird bei der Elektrolyse mit nicht-ionenselektiven Membranen auch dafür verbraucht, unerwünschtes Na⁺ in das zweite Kompartiment zu transportieren. Im zweiten Kompartiment angekommen wird das Na⁺ zudem über unbeabsichtigte elektrochemische Prozesse in unerwünschte Nebenprodukte umgesetzt. Bezogen auf die Ausbeute an dem Zielprodukt Li ist die Energieeffizienz des Prozesses eingeschränkt. Schließlich sind diese Membranen empfindlich gegen die Anwesenheit von zweiwertigen Kationen wie bspw. $Mg^{2+}$ und $Ca^{2+}$ Diese Kationen vergiften die Membran mit der Zeit, sodass die Betriebsdauer organischer Ionenaustauschmembranen eingeschränkt ist.

Eine bessere Ionenselektivität versprechen die (glas)keramischen LiSICon Materialien. Ein für die industrielle Praxis hochrelevantes Problem ist hier jedoch weiterhin die Stabilität der LiSICon Membran gegenüber Verunreinigungen. So enthalten die Li⁺-haltigen Wässer, die bei der Aufarbeitung von gebrauchten LIB entstehen, weitere Kationen wie insbesondere Na⁺ und K⁺, welche das LiSICon-Material nachhaltig schädigen: Diese Kationen besetzen offenbar dauerhaft die Fehlstellen in der Kristallstruktur, sodass ein Transport der Li⁺-Kationen durch die Membran kaum mehr möglich ist. Die Betriebsdauer der elektrochemischen Zelle ist dann abgelaufen. Weil LiSICon-Material sehr teuer ist, ist das Recycling von Li aus LIB bei kurzer Lebensdauer der Membran unwirtschaftlich. Auch die Sole der Li-Salzseen enthält von Natur aus viel Natrium und kann daher nicht auf bekannte LiSICon-Membranen losgelassen werden. Daher wird Lithium aus Salzseen weiterhin energieintensiv thermisch abgetrennt und/oder unter großem Wassereinsatz schrittweise gelöst und wieder auskristallisiert. Zwar wird dabei das Wasser mit Sonnenstrahlung verdunstet; jedoch ist das Wasser zum Lösen von LiCl in den Wüsten Südamerikas rar. So führt dieser Weg dort zu großen Problemen.

Ein weiteres praktisches Problem ist der hohe spezifische elektrische Widerstand des LiSICon-Materials. Dadurch erhält die elektrochemische Zelle einen hohen OHM'schen Innenwiderstand, sodass das Verfahren einen entsprechend großen elektrischen Energiebedarf hat. Um den zu senken, kann die Membran theoretisch verdünnt werden. Jedoch erreicht sie dann aufgrund ihrer geringen Materialstärke in aggressiven Umgebungen wiederum nur eine geringe Standzeit.

Nach alledem liegt der vorliegenden Erfindung die Aufgabe zu Grunde, ein Verfahren zur elektrochemischen Herstellung von LiOH aus Li⁺-haltigem Wasser mit Hilfe einer LiSICon Membran anzugeben, welches sich auch im großtechnischen Maßstab wirtschaftlich betreiben lässt. Insbesondere soll das Verfahren eine hohe Energieeffizienz aufweisen und selbst dann eine lange Standzeit der Membran erreichen, wenn der verwendete Feed Verunreinigungen enthält, welche für LiSICon Materialien schädlich sind.

Gelöst wird diese Aufgabe durch ein Verfahren nach Anspruch 1.

Ein erster Gegenstand der Erfindung ist mithin ein Verfahren zur Herstellung von Wasserstoff und Lithiumhydroxid mit den folgenden Schritten:

a) Bereitstellen eines Feed enthaltend zumindest Wasser, Li-Kationen, Anionen, sowie Verunreinigungen, wobei die Konzentration von Li-Kationen in dem Feed $C_F$ mindestens 200 Gew.-ppm oder zwischen 500 Gew.-ppm und 140000 Gew.-ppm beträgt, jeweils bezogen auf das Gesamtgewicht des Feeds, wobei der bei 25°C mittels Glaselektrode gemessene pH-Wert des Feeds zwischen 2 und 9 beträgt;

b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt;

c) Bereitstellen einer basischen Verbindung;

d) Bereitstellen von mindestens einer elektrochemischen Zelle, wobei die elektrochemische Zelle die folgenden Merkmale aufweist:

i. die elektrochemische Zelle umfasst ein erstes Kompartiment, in dem eine Anode angeordnet ist;
ii. die elektrochemische Zelle umfasst ein zweites Kompartiment, in dem eine Kathode angeordnet ist;
iii. die elektrochemische Zelle umfasst eine Membran, welche das erste Kompartiment von dem zweiten Kompartiment trennt, wobei die Membran die Fläche A aufweist;
iv. die Membran enthält ein anorganisches Material, welches eine Leitfähigkeit für Li-Ionen besitzt und welches elektrisch isolierend ist;

e) Bereitstellen von mindestens einer elektrischen Spannungsquelle, welche über eine erste elektrische Leitung mit der Anode und über eine zweite elektrische Leitung mit der Kathode verbunden ist;

f) Dosierung der basischen Verbindung zu dem Feed, sodass ein Intermediat erhalten wird, wobei der mittels Glaselektrode bei 25°C gemessene pH-Wert des Intermediats zwischen 9 und 13 beträgt,

g) Beaufschlagen des ersten Kompartiments mit dem Intermediat;

h) Beaufschlagen des zweiten Kompartiments mit dem armen Arbeitsmedium;

i) Beaufschlagen der elektrochemischen Zelle mit einer von der elektrischen Spannungsquelle bezogenen elektrischen Spannung U, dergestalt, dass ein elektrischer Strom $I$ zwischen Anode und Kathode fließt, wobei der Quotient Q aus der Stromstärke des elektrischen Stroms $I$ und der Fläche A der Membran zwischen 100 A/m$^2$ und 500 A/m$^2$ oder zwischen 150 A/m$^2$ und 350 A/m$^2$ beträgt;

j) Abziehen von Abwasser enthaltend zumindest Wasser, darin gelöste Li-Salze, Sauerstoff, sowie Verunreinigungen aus dem ersten Kompartiment, wobei die Konzentration von Li-Ionen in dem Abwasser Cw bezogen auf das Gesamtgewicht des Abwassers geringer ist als die Konzentration von Li-Ionen im Feed $C_F$;

k) Abziehen eines reichen Arbeitsmediums enthaltend Wasser und Lithiumhydroxid sowie Wasserstoff aus dem zweiten Kompartiment, wobei die Konzentration von Lithiumhydroxid in dem reichen Arbeitsmedium $C_{M1}$ bezogen auf das Gesamtgewicht des reichen Arbeitsmediums größer ist als die Konzentration im von Lithiumhydroxid in dem armen Arbeitsmedium $C_{M0}$.

Ein besonderer Aspekt des erfindungsgemäßen Verfahrens ist, dass in der Zelle gleichzeitig das Lithium durch die Membrane selektiv abgetrennt wird und eine Elektrolyse von Wasser erfolgt. Bei der Wasserelektrolyse wird Wasser ($H_2O$) elektrochemisch in $H_2$ und $O_2$ getrennt. An der Kathode wird OH$^-$ und Wasserstoff gebildet. Die OH$^-$ - Anionen können die LiSICon-Membran jedoch nicht überwinden und verbinden sich mit den im kathodischen Kompartiment ankommenden Li$^+$ - Kationen zu Lithiumhydroxid LiOH. An der Anode wird Sauerstoff und H$^+$ gebildet.

Bei dem gleichzeitigen Betrieb der Li+ Membranabtrennung und der Wasserelektrolyse in der elektrochemischen Zelle mit LiSICon Membran entstehen somit direkt Lithiumhydroxid LiOH und molekularer Wasserstoff $H_2$. LiOH ist in Wasser gelöst, $H_2$ zu einem kleinen Teil auch, zum größten Teil aber als Gas ausgetrieben. Das Wasser mit dem LiOH sowie das gelöste und gasförmige $H_2$ werden aus dem kathodischen Kompartiment der Zelle abgezogen. Das LiOH wird von dem Wasser abgetrennt. Auf diese Weise kann ein LiOH gewonnen werden, welches - aufgrund der selektiven Lithium-Ionen-Wanderung durch die Membran- eine entsprechende Reinheit besitzt - in der Batterieproduktion verwendet werden kann.

Der zugleich entstandene Wasserstoff kann aufgefangen und in der Wasserstoffwirtschaft eingesetzt werden. Sofern die elektrochemische Zelle mit grünem Strom betrieben wird, hinterlässt das Verfahren auch einen geringen $CO_2$-Fußabdruck.

Als Feed für die kombinierte Li Abtrennung und Wasserelektrolyse wird ein Wasser mit enthaltenden Li$^+$ Kationen benötigt. Ein solches Wasser wird entweder im Zuge der Aufarbeitung verbrauchter LIB erzeugt oder es wird eine Li-Sole aus einer natürlichen Lagerstätte verwendet.

Ein wesentlicher Aspekt des erfindungsgemäßen Verfahrens besteht darin, dass der elektrochemische Prozess im basischen Milieu, genauer gesagt bei pH 9 bis 13 durchgeführt wird. Dies ermöglicht die effiziente Wasserelektrolyse, welche wiederum die Vorrausetzung für die direkte Herstellung von LiOH ist. Außerdem deuten erste Langzeitversuche darauf hin, dass LiSICon Materialen in diesem pH-Bereich eine besonders lange Standzeit aufweisen - selbst bei hohen Stromdichten.

Ein pH-Wert zwischen 9 und 13 herrscht vorzugsweise sowohl im ersten Kompartiment als auch im zweiten Kompartiment. Der pH-Wert kann in beiden Zellen gleich sein oder unterschiedlich, solange der jeweilige Wert zwischen 9 und 13 liegt. Bei Betrachtung der Halbzellreaktionen der Wasserzersetzung stellt sich nämlich heraus, dass die Kombination einer mit einem sauren Feed betriebenen Anolytzelle mit einer mit einem basischen Arbeitsmedium betriebenen Katholyt-Zelle eine höhere Spannung für die Wasserzersetzung benötigt als die Kombination von zwei Halbzellen mit jeweils basischem Feed. Somit ist ein basischer pH-Wert in beiden Halbzellen (Kompartimente) besonders vorteilhaft, da so eine geringere Spannung für die gleichen Prozesse benötigt wird. Verglichen mit einem Prozess, bei dem im anolytischen Kompartiment ein saurer pH vorliegt, währenddessen im kathodischen Kompartiment ein basischer pH herrscht, liegt die Energieeinsparung aufgrund der reduzierten Spannung bei einem in beiden Kompartimenten basischen Prozess im Bereich von ca. 5 bis 15%, je nachdem, welche Spannungslage für den Membranprozess gewählt ist.

Da die lithiumhaltigen Wertstoffströme aus dem Batterierecycling oder das Meerwasser in der Regel meist nicht basisch, sondern tendenziell eher sauer sind (pH 4 bis 9), wird erfindungsgemäß der pH-Wert durch Zugabe einer basischen Verbindung zum Feed eingestellt. Erst das so erhaltene Intermediat mit dem gewünschten pH-Wert von 9 bis 13 wird in die Zelle gefahren. Die pH-Werte sind für Temperaturen von 25°C angeben. Die pH Messung erfolgt per Glaselektrode, die mit einer kommerziell verfügbaren Prüfflüssigkeit kalibriert wird.

Das kathodische Kompartiment wird erfindungsgemäß mit einem Arbeitsmedium beaufschlagt. Dabei handelt es sich um Wasser mit unterschiedlicher Konzentration an LiOH. Im Zulauf zum zweiten Kompartiment beträgt die Konzentration $c_{M0}$ an LiOH mindestens 50 Gew.-ppm. Im Ablauf ist die Konzentration $c_{M1}$ an LiOH viel größer. Deswegen wird der Zulauf als "*armes Arbeitsmedium*" bezeichnet, währenddessen der Ablauf "*reiches Arbeitsmedium*" genannt wird. Die Attribute arm und reich betreffen den Gehalt an LiOH. Die Untergrenze von LiOH im armen Arbeitsmedium $c_{M0}$ > 50 Gew.-ppm ist einzuhalten, damit der Prozess mit einem geringen elektrischen Widerstand im Arbeitsmedium starten kann: Es hat sich gezeigt, dass die gewünschte Herstellung von LiOH und $H_2$ sehr viel schlechter gelingt, wenn das zweite Kompartiment mit Wasser beaufschlagt wird, das frei von LiOH ist. Eine konkrete Obergrenze der LiOH Konzentration im armen Arbeitsmedium gibt es nicht. Allerdings muss $c_{M0} < c_{M1}$ gelten, da der Prozess andernfalls kein LiOH produziert. Die 50 Gew.-ppm LiOH entsprechen 15 Gew.-ppm Lithium.

Ein weiterer wesentlicher Aspekt des erfindungsgemäßen Verfahrens ist die hohe Stromdichte, bei dem es betrieben wird. Konkret beträgt die Stromdichte, also der Quotient Q aus der Stromstärke des elektrischen Stroms I und der Fläche A der Membran zwischen 100 A/m$^2$ und 500 A/m$^2$, oder vorzugsweise zwischen 150 A/m$^2$ und 350 A/m$^2$. Diese hohen Stromdichten erlauben einerseits eine hohe Stromeffizienz, erfordern aber andererseits eine gute Stabilität des Membranmaterials unter harschen Bedingungen. Als Membranmaterial wird daher ein anorganisches Material gewählt, welches einerseits elektrisch isolierend ist und andererseits Li-Ionen leiten kann. Beispiele für ein geeignetes Membranmaterial sind (glas)keramische LiSICons.

Als basische Verbindung, die zur Einstellung des pH-Wertes des Intermediat verwendet wird, wird vorzugsweise einer der folgenden Stoffe oder Mischungen davon eingesetzt: Calciumhydroxid ($Ca(OH)_2$), Kaliumhydroxid (KOH), Natriumhydroxid (NaOH), Lithiumhydroxid (LiOH), Ammoniumhydroxid ($NH_4OH$). Vorzugsweise werden diese Stoffe als wässrige Lösungen eingesetzt, etwa Kalilauge, Natronlauge, Lithiumlauge oder Ammoniakwasser. Diese wässrigen Lösungen lassen sich gut dosieren. Kalilauge und Natronlauge sind vergleichsweise preiswert. Lithiumlauge wird vorzugsweise in dem Prozess selbst hergestellt.

Ganz besonders bevorzugt wird als basische Verbindung $Ca(OH)_2$ eingesetzt. Insbesondere wird Calciumhydroxid in seiner hydratisierten Form eingesetzt, nämlich als Löschkalk. Löschkalk ist leicht verfügbar. Gegenüber Kalilauge und Natronlauge hat Löschkalk den Vorteil, dass er kaum K und Na enthält. Folglich wird das Intermediat nicht mit den Membrangiften $K^+$ und $Na^+$ konterminiert.

Optimalerweise wird die basische Verbindung zu dem Feed so dosiert, dass der bei 25°C mittels Glaselektrode gemessene pH-Wert des Intermediats zwischen 9 und 12 beträgt. In diesem pH-Fenster funktioniert die Wasserspaltung ganz gut und die Membran wird nicht angegriffen. Die Glaselektrode zur Bestimmung des pH-Wertes ist wie üblich mit einer definierten Prüfflüssigkeit zu kalibrieren.

Die elektrochemische Zelle kann auch bei anderen Temperaturen als 25°C betrieben werden. Der pH-Wert ist nicht anzupassen: Das Intermediat sollte bei Zelltemperatur einen pH-Wert aufweisen, der einem pH von 9 bis 12 bei 25°C entspricht. Die Zelltemperatur kann 20°C bis 70°C betragen.

Die Zugabe der basischen Verbindung hat auch den Vorteil, dass im Feed enthaltene, unerwünschte Ionen gebunden werden. Die Membran wird dadurch geschützt und die Reinheit des Produkts verbessert. Insbesondere ist es dank der Zugabe der basischen Verbindung möglich einen Feed zu verarbeiten, der eines oder mehrere der folgenden Anionen enthält: Sulfat, Carbonat, Hydroxid, Chlorid, Fluorid.

Bei dieser Aufstellung ist eingeschlossen, dass sich in wässrigen Lösungen die Anionen mit den entsprechenden protonierten Ionen im Gleichgewicht befinden. Die genauen Konzentrationen sind dabei vom exakten pH-Wert der jeweiligen Lösung abhängig und lassen sich mit Hilfe der entsprechenden Säure- und Basenkonstanten berechnen. Die Berechnung ist dargestellt in:

Ruland (Hrsg.) et al: Analytik: Daten, Formeln, Übungsaufgaben. Auflage 109, 2019, Walter de Gruyter GmbH & Co. KG Seiten 257f.

Neben den genannten Anionen kann der Feed auch Verunreinigungen in Gestalt von Verbindungen von folgenden Elementen enthalten: B, Na, Mg, Al, Si, K, Ca, Mn, Fe, Co, Ni, Cu, C. Die gelisteten Alkali- und Erdalkalimetalle sind Begleitelemente des Lithiums aus natürlichen Lagerstätten, währenddessen die anderen genannten Metalle als Leiter- oder Kathodenmaterial in LIB verwendet werden und sich daher in Feeds finden, die bei der Aufarbeitung von verbrauchten LIB gewonnen werden. Der Kohlenstoff stammt aus organischen Verbindungen, die in LIB enthalten waren, etwa aus Folien, Separatoren, Dicht- oder Klebstoffen.

Erfindungsgemäß wird eine Membran verwendet, welche ein anorganisches Material enthält. Anders als bei Polymermembranen ist damit die erforderliche Ionenselektivität zu erreichen. Vorzugsweise besteht die Membran vollständig aus dem anorganischen Material. Verbundmembranen, die das anorganische Material lediglich als Beschichtung auf einem Trägermaterial enthalten oder bei denen das anorganische Material in einem andersartigen Matrixmaterial dispergiert ist, haben sich als Irrweg erwiesen.

Damit der Prozess funktioniert, muss das anorganische Material Li-Ionen leiten und zugleich elektrisch isolieren.

Die spezifische Leitfähigkeit $\sigma$ für Li-Ionen sollte einer Temperatur von 23°C mindestens $1*10^{-5}$ S/m oder mindestens $5*10^{-5}$ S/m oder mindestens $10*10^{-5}$ S/m und maximal $100*10^{-5}$ S/m betragen. Die Li-Leitfähigkeit des Materials wird per Impedanz Spektroskopie gemessen. Diese Messung geschieht wie folgt:

Der Messaufbau umfasst zwei zylindrische Elektroden, zwischen denen die Probe angeordnet wird. Um einen optimalen Kontakt mit den Elektroden und reproduzierbaren Kontraktdruck sicher zu stellen, wird in Gewicht auf der Probe platziert.

Ein Potentiostat (ZAHNER-elektrik I. Zahner-Schiller GmbH & Co. KG, Kronach-Gundelsdorf, Germany) wird mit den Elektroden verbunden und über die Software Thales (ZAHNER) gesteuert. Die Messungen werden durchgeführt in einem Frequenzbereich von 1 Hz bis 4 MHz und einer Amplitude von 5mV mit Proben, die poliert wurden und auf die eine dünne, leitfähige Goldschicht aufgesputtert wurde.

Die Messergebnisse werden in Nyquist-Diagrammen dargestellt und mit der Software Analysis (ZAHNER) ausgewertet. Der elektrische Widerstand wird an dem Maximum der Kurve des Nyquist-Diagramms abgelesen. Die spezifische Ionen-Leitfähigkeit $\sigma$ [mS/cm] wird dann berechnet mit der Formel $\sigma=(h\cdot 10^4)/(R\cdot\pi/4\cdot d^2)$, worin h für die Höhe der Probe in mm, R für den gemessenen elektrische Widerstand in $\Omega$ und d für den Durchmesser der Probe in mm stehen.

Die spezifische Leitfähigkeit für Elektronen $\gamma$ (elektrische Leitfähigkeit) sollte bei einer Temperatur von 23°C weniger als $10^{-7}$ S/cm ($10^{-9}$ S/m) oder weniger als $10^{-12}$ S/m oder weniger als $10^{-16}$ S/m betragen. Das anorganische Material ist daher aus elektronenleitender Sicht als Nichtleiter zu qualifizieren.

Vorzugsweise wird als anorganisches Material ein LiSICon verwendet. LiSICon-Materialien sind (glas)keramische Stoffe, die Lithium-Ionen leiten und zugleich elektrisch isolieren. Es können grundsätzlich alle bekannten LiSICon-Materialien als anorganisches Material im Sinne der Erfindung eingesetzt werden. Bekannte LiSICon-Materialien erfüllen die oben angegebenen Anforderungen sowohl an die elektrische Leitfähigkeit als auch an die Ionenleitfähigkeit des anorganischen Materials.

Beispielsweise kann das LiSICon-Material Lithium-Aluminium-Titanphosphat (LATP) verwendet werden. Dementsprechend sieht eine Variante der Erfindung es vor, dass es sich bei dem anorganischen Material um eine Verbindung der folgenden Stöchiometrie handelt:

$$Li_{1+x}Al_xTi_{2-x}(PO_4)_3$$

worin gilt: $0.1 \leq x \leq 0.3$, wobei bevorzugt gilt x=0.3.

Alternativ kann das LiSICon-Material Lithium-Aluminium-Germaniumphosphat (LAGP) verwendet werden. Dementsprechend sieht eine Variante der Erfindung es vor, dass es sich bei dem anorganischen Material um eine Verbindung der folgenden Stöchiometrie handelt:

$$Li_{1+x}Al_xGe_{2-x}(PO_4)_3$$

worin gilt: x=0 oder x=0.2 oder x=0.4.

Alternativ kann das LiSICon-Material Lithium-Aluminium-Titan-Siliciumphosphat (LATSP) verwendet werden. Dementsprechend sieht eine Variante der Erfindung es vor, dass es sich bei dem anorganischen Material um eine Verbindung der folgenden Stöchiometrie handelt:

$$Li_{1+x+y}Al_xTi_{2-x}Si_yP_{3-y}O_{12}$$

worin gilt: $0.1 \leq x \leq 0.3$ und $0.2 \leq y \leq 0.4$.

Als Alternative zu den genannten Phosphaten kann das oxidische LiSICon-Material Lithium-Lanthan-Titanoxid (LLTO) verwendet werden. Dementsprechend sieht eine Variante der Erfindung es vor, dass es sich bei dem anorganischen Material um eine Verbindung der folgenden Stöchiometrie handelt:

$$Li_{3x}La_{(2/3)-x\square(1/3)-2x}TiO_3$$

worin gilt: $0 \leq x \leq 0.16$.

Besonders bevorzugt wird aber ein LiSICon verwendet, welches sich aus dem Lithium-Aluminium-Germaniumphosphat ableitet, aber zusätzlich Titan enthält. Es wird als LAGTP bezeichnet.

Dementsprechend sieht eine bevorzugte Variante der Erfindung es vor, dass es sich bei dem anorganischen Material um eine Verbindung der folgenden Stöchiometrie handelt:

$$Li_{1.4}A_{0.4}(Ge_{1-x}Ti_x)_{1.6}(PO_4)_3$$

worin gilt: $0 \leq x \leq 1$.

Eine besonders bevorzugte Weiterbildung der Erfindung sieht es vor, dass ein LATSP verwendet wird, was zusätzlich Germanium enthält. Es wird hier LAGTSP genannt.

Dementsprechend sieht eine besonders bevorzugte Variante der Erfindung es vor, dass es sich bei dem anorganischen Material um eine Verbindung der folgenden Stöchiometrie handelt:

$$Li_{1+x+y}Al_xTi_{2-x}Si_yP_{3-y}O_{12} * nGeO_2$$

worin gilt: $0 \leq x \leq 1$ und $0 \leq y \leq 1$ und $0 \leq n \leq 1$.

Ein LAGTSP ist beispielsweise erhältlich von der Fa. OHARA GmbH, Hofheim, Deutschland erhältlich unter dem Produktnamen LICGC® AG01

Das Lithiumhydroxid ist in dem reichen Arbeitsmedium enthalten und wird mit diesem aus dem zweiten Kompartiment abgezogen. Um es nutzbar zu machen, muss es aus dem reichen Arbeitsmedium abgetrennt werden. Dafür wird ein Trennapparat bereitgestellt. Eine bevorzugte Weiterbildung der Erfindung sieht daher die folgenden zusätzlichen Verfahrensschritte vor:

m) Bereitstellen eines Trennapparates;

n) Abtrennen von Lithiumhydroxid aus dem reichen Arbeitsmedium mit Hilfe des Trennapparates.

Nach dem Abtrennen des Lithiumhydroxid aus dem reichen Arbeitsmedium kann das Arbeitsmedium entweder als Abwasser entsorgt werden oder vorzugsweise als armes Arbeitsmedium wiederverwertet werden. Dafür muss der Trennappart so gefahren werden, dass das LiOH nicht vollständig abgetrennt wird, sondern dass die Mindestkonzentration $c_{m0}$ von 50 Gew.-ppm LiOH nicht unterschritten wird. Sodann kann das Arbeitsmedium als armes Arbeitsmedium in das zweite Kompartiment rezykliert werden. Es entsteht so ein Kreislauf des Arbeitsmediums zwischen dem zweiten Kompartiment und dem Trennapparat.

Eine bevorzugte Weiterbildung der Erfindung sieht daher den folgenden zusätzlichen Verfahrensschritten vor:
n) Abtrennen von Lithiumhydroxid aus dem reichen Arbeitsmedium mit Hilfe des Trennapparates, sodass das arme Arbeitsmedium erhalten wird,
wobei der Schritt
b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt; mit Hilfe des Trennapparates erfolgt.

Um die Kreislaufführung des Arbeitsmediums zwischen Trennapparat und zweiten Kompartiment zu ermöglichen, macht es Sinn, beide Apparate an demselben Ort aufzustellen. Derselbe Ort ist als eine zusammenhängende Produktionsanlage zu verstehen. Folglich sind elektrochemische Zelle und Trennappart Teil einer zusammenhängenden Anlage.

Es ist auch denkbar, den Trennappart entfernt von der elektrochemischen Zelle, an einem anderen Standort aufzustellen. Dann muss allerdings das Arbeitsmedium zwischen Zelle und Trennappart transportiert werden. Dies macht aus energetischen Gesichtspunkten aber kaum Sinn.

Vorzugsweise wird zumindest die elektrochemische Zelle kontinuierlich betrieben. Dies bedeutet, dass das beide Kompartimente dauerhaft durchströmt werden. Das erste Kompartiment wird von Intermediat durchströmt, wobei Abwasser entsteht, währenddessen das zweite Kompartiment von Arbeitsmedium durchströmt wird, welches als armes Arbeitsmedium anströmt und als reiches Arbeitsmedium abströmt. Dies ermöglicht einerseits einen höheren Durchsatz und anderseits werden membranschädliche Bestandteile von Intermediat und Arbeitsmedium kontinuierlich abgezogen. Daher ist im kontinuierlichen Betrieb eine bessere Membranhaltbarkeit zu erwarten als im Batch betrieb.

Ein wichtiger Aspekt des Verfahrens ist, dass die Herstellung von Wasserstoff und Lithiumhydroxid zeitgleich erfolgt. Ermöglicht wird dies durch die kombinierte Membranelektrolyse des Li+ und der elektrochemischen Wasserspaltung im basischen Milieu.

Die elektrische Spannung, mit der die elektrochemische Zelle beaufschlagt wird, ist einfachstenfalls über die Zeit konstant (Gleichspannung). Es hat sich aber als vorteilhaft erwiesen, die Spannung über die Zeit periodisch zu verändern. Dies bewirkt nämlich eine Verbesserung der Lebensdauer der Membran. Eine Erklärung dafür könnte sein, dass in Zeiten der Abschaltung der Zelle membranschädliche Ionen von der Membran fortgespült werden.

Eine bevorzugte Weiterbildung des Verfahrens sieht daher vor, dass die von der elektrischen Spannungsquelle bezogene elektrische Spannung sich über die Zeit periodisch verändert.

Vorzugsweise verändert sich die Spannung wellenförmig. Die Wellenform kann dabei ein Sinus, oder ein Rechteck oder ein Dreieck oder ein Sägezahn sein.

Einfachstenfalls wird die Wellenform dadurch erzielt, dass die Polarität der Spannung periodisch gewechselt wird (Wechselspannung).

Besonders bevorzugt wird die Spannung jedoch dadurch geändert, dass sie periodisch ein und ausgeschaltet wird. Im eingeschalteten Zustand wird ein konstanter Wert gehalten. So entsteht eine Rechteck-Welle. In dem Zusammenhang wird auch von einer Taktung der Spannung gesprochen. Es hat sich als vorteilhaft erwiesen, dass die Zeiten, in denen die Spannung eingeschaltet ist, länger zu bemessen sind als die Zeiten, in denen die Spannung ausgeschaltet ist. Vorzugsweise sind die Einschaltungszeiten 3- bis 7-mal so lang wie die Ausschaltungszeiten, vorzugsweise etwa 5-mal so lang.

Eine bevorzugte Weiterbildung des Verfahrens sieht demnach vor, dass die Wellenform rechteckig und nämlich gebildet ist von einem ersten Wellen-Abschnitt, in dem die Spannung mit einem konstanten Wert eingeschaltet ist und einem auf den ersten Wellen-Abschnitt folgenden zweiten Wellen-Abschnitt, bei dem die Spannung ausgeschaltet ist, wobei die Länge des ersten Wellen-Abschnitts $\lambda_1$ beträgt, wobei die Länge des zweiten Wellen-Abschnitts $\lambda_2$ beträgt und

wobei gilt

$$\lambda_1 = \phi^* \, \lambda_2 \text{ mit } 3 < \phi < 7.$$

Hinsichtlich der periodischen Veränderung der Spannung sei noch darauf hingewiesen, dass die Spannung nicht notwendigerweise wie eine Wechselspannung die Polarität ändern muss. Es ist zwar denkbar, die Spannung mit einer Amplitude um $U=0$ schwingen zu lassen; bevorzugt ist es aber, die Polarität (also das Vorzeichen) der Spannung unveränderlich zu lassen und lediglich den Betrag der Spannung zu ändern. Eine bevorzugte Weiterbildung des Verfahrens sieht daher vor, dass die Polarität der elektrischen Spannung beibehalten wird.

Die Erfindung soll nun anhand von Prozessfließbildern näher erläutert werden. Hierfür zeigen:

Figur 1:   Funktionsprinzip zeitgleiche Membranelektrolyse von Li$^+$ und Wasserelektrolyse in elektrochemischer Zelle mit LiSICon Membran;

Figur 2:   Funktionsprinzip Kreislauf zwischen elektrochemischer Zelle und Trennapparat.

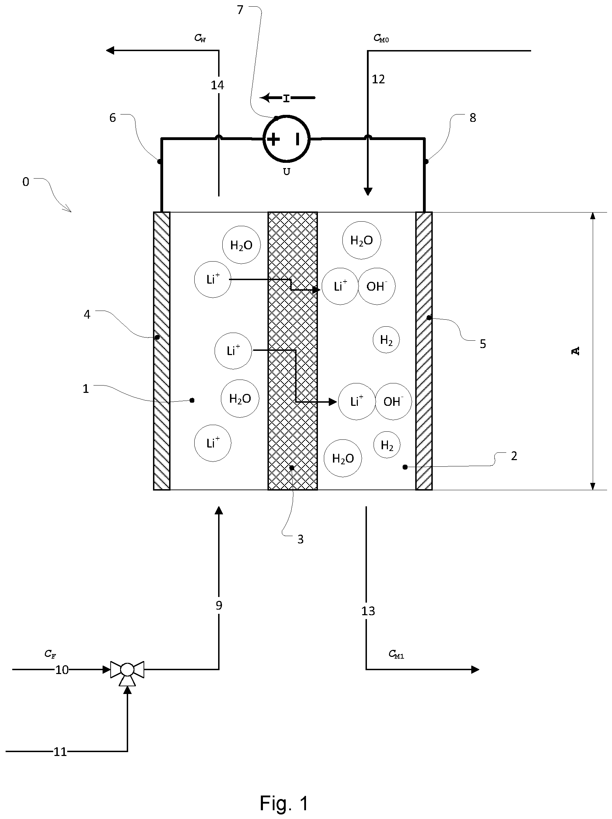

Die für die Durchführung des Verfahrens notwendige elektrochemische Zelle 0 ist in Figur 1 dargestellt. Sie umfasst ein erstes Kompartiment 1 und ein zweites Kompartiment 2. Beide Kompartimente 1, 2 sind von einer Membran 3 voneinander getrennt. In dem ersten Kompartiment 1 ist eine Anode 4 angeordnet. In dem zweiten Kompartiment 2 ist eine Kathode 5 angeordnet. Das erste Kompartiment 1 kann daher auch als anodisches Kompartiment bezeichnet werden, währenddessen das zweite Kompartiment 2 als kathodisch bezeichnet wird.

Eine erste elektrische Leitung 6 verbindet die Anode 4 mit einer Spannungsquelle 7. Eine zweite elektrische Leitung 8 verbindet die Kathode 5 mit der Spannungsquelle 7. Die Polarität der Spannungsquelle 7 ist so gewählt, dass der positive Pol der Spannungsquelle 7 auf die Anode 4 geschaltet ist, währenddessen der negative Pol der Spannungsquelle 7 auf die Kathode 5 geschaltet ist. Diese Polarität wird stets beibehalten, auch wenn der Betrag der von der Spannungsquelle 7 bezogenen elektrische Spannung U sich über die Zeit ändert. Einfachstenfalls ist U über die Zeit jedoch konstant.

Durch die beiden elektrischen Leitungen 6, 8 und über die elektrische Spannungsquelle 7 fließt ein elektrischer Strom *I*. Da die Membran 3 elektrisch isoliert, gibt es keinen elektrischen Kurzschluss zwischen den beiden Elektroden 4, 5 über die Membran 3.

Die Membran 3 ist eine Flachmembran, die vollständig aus einem LiSICon Material besteht. Die Anode 4 ist ein metallisches, flaches Blech enthaltend Titan, Niob oder Tantal. Die Kathode 5 ist ebenfalls ein flaches Metallblech enthaltend Titan oder Nickel. Einfachstenfalls wird rostfreies Stahlblech als Kathode verwendet. Anode 4, Kathode 5 und Membran 3 haben dieselbe Gestalt, sie können rechteckig oder kreisrund sein. Dies ist in der Seitenansicht der Figur 1 nicht zu erkennen. Anstelle von Blechen können auch Streckmetalle, Gitter oder Netze aus den angegebenen Materialien als Elektrode verwendet werden.

Die elektrochemische Zelle 0 weist eine aktive Fläche A auf, welche dem Flächeninhalt der Membran 3, der Anode 4 und der Kathode 5 entspricht.

Im Betrieb wird das erste Kompartiment 1 mit einem Intermediat 9 beaufschlagt. Bei dem Intermediat 9 handelt es sich um eine wässrige Lösung enthaltend Li+ Kationen. Aus elektrochemischer Sicht ist das Intermediat 9 als Anolyt aufzufassen.

Das Intermediat 9 wird dadurch erhalten, dass ein Feed 10 mit einer basischen Verbindung 11 vermischt wird. Bei dem Feed 10 kann es sich um eine Li-Lauge aus einer natürlichen Lagerstätte handeln oder um ein Stoffstrom, der bei der Aufarbeitung von verbrauchten LIB anfällt. Die Konzentration der Li+ Kationen im Feed 10 (Formelbuchstabe er) sollte mindestens 200 Gew.-ppm betragen, bezogen auf die Gesamtmasse des Feeds. Meerwasser hat eine geringere Li-Konzentration und müsste daher erst aufkonzentriert werden, bevor es in dem Verfahren verwendet wird. Der Feed 10 enthält auch Anionen wie Sulfat oder Chlorid. Die Feed 10 enthält auch Verunreinigungen. Anionen und Verunreinigungen sind in Figur 1 nicht dargestellt. Hauptkomponente des Feeds 10 ist Wasser $H_2O$. Der pH-Wert des Feeds liegt zwischen 2 und 9.

Bei der basischen Verbindung 11 handelt es sich optimalerweise um Calciumhydroxid $Ca(OH)_2$ (Löschkalk). Durch Zudosieren der basischen Verbindung 11 zu dem Feed 10 entsteht das Intermediat 9. Zweck der Zugabe der basischen Verbindung 11 zu dem Feed 10 ist die Steigerung des pH-Wertes in den alkalischen Bereich, genauer gesagt auf einen pH-Wert zwischen 9 und 13. Die elektrochemischen Prozesse in der Zelle werden erfindungsgemäß im basischen Milieu durchgeführt. Die Dosis der basischen Verbindung 11 wird deswegen so gewählt, dass der pH des Intermediats einen Wert zwischen 9 und 13 annimmt. Das Intermediat 9 wird in das erste Kompartiment 1 gefahren.

Das zweite Kompartiment wird mit einem armen Arbeitsmedium 12 beaufschlagt. Das arme Arbeitsmedium 12 ist Wasser $H_2O$ mit einer geringen Konzentration $C_{M0}$ Li$^+$ Kationen. Die Konzentration $c_{M0}$ beträgt mindestens 50 Gew.-ppm bezogen auf die Gesamtmasse des armen Arbeitsmediums 12. Aus elektrochemischer Sicht ist das arme Arbeitsmedium 12 als Katholyt aufzufassen.

Die elektrochemische Zelle 0 wird zudem mit einer von der Spannungsquelle 7 bezogener elektrischer Spannung U beaufschlagt. Dies bewirkt folgendes:

Zum einen kommt es zu einer Wasserelektrolyse, bei der Wasser ($H_2O$) elektrochemisch in Wasserstoff ($H_2$) und Sauerstoff ($O_2$) getrennt wird. An der Kathode 5 wird $OH^-$ und Wasserstoff gebildet. Die $OH^-$ - Anionen können die Membran 3 allerdings nicht überwinden und verbinden sich mit den im kathodischen Kompartiment 2 vorhandenen $Li^+$ -Kationen zu Lithiumhydroxid (LiOH). An der Anode 4 wird Sauerstoff und $H^+$ gebildet.

Die Bildung des LiOH im kathodischen Kompartiment 2 wird dadurch aufrechterhalten, dass Li+ Kationen getrieben von der Spannung U aus dem Intermediat 9 in Richtung der Kathode 5 wandern. Sie überwinden dabei die Membran 3 aufgrund deren Li-Leitfähigkeit und reichern sich im Arbeitsmedium an (Membranelektrolyse). So entsteht ein reiches Arbeitsmedium 13, was aus dem zweiten Kompartiment 2 abgezogen wird. Die Konzentration an Li+ Ionen im reichen Arbeitsmedium 13 ist größer als im armen Arbeitsmedium 12, es gilt $c_{M1} > c_{M0}$.

In der elektrochemischen Zelle 0 läuft somit gleichzeitig eine Wasserelektrolyse, eine Membranelektrolyse von $Li^+$ und eine Synthese von LiOH ab.

Bei dem gleichzeitigen Betrieb der Li+ Membranelektrolyse und der Wasserelektrolyse in der elektrochemischen Zelle entstehen somit direkt Lithiumhydroxid LiOH und molekularer Wasserstoff $H_2$. Das LiOH ist im Wasser gelöst, der Wasserstoff ist teilweise im Wasser gelöst und liegt auch gasförmig vor. Das Wasser mit dem LiOH und dem gelösten Wasserstoff wird aus dem kathodischen Kompartiment der Zelle als reiches Arbeitsmedium 13 abgezogen. Gasförmiger Wasserstoff wird ebenfalls aus dem zweiten Kompartiment 2 abgezogen.

Das Intermediat 9 wird durch die Membranelektrolyse um Li + abgereichert, sodass ein Abwasser 14 entsteht. Es gilt $c_W < c_F$. Der Formelbuchstabe $c_W$ steht dabei für die Konzentration von Li Ionen in dem Abwasser 14, bezogen auf die Gesamtmasse des Abwassers 14. Der Formelbuchstabe $c_F$ steht dabei für die Konzentration von Li Ionen in dem Feed 10, bezogen auf das Gesamtgewicht des Feeds 10.

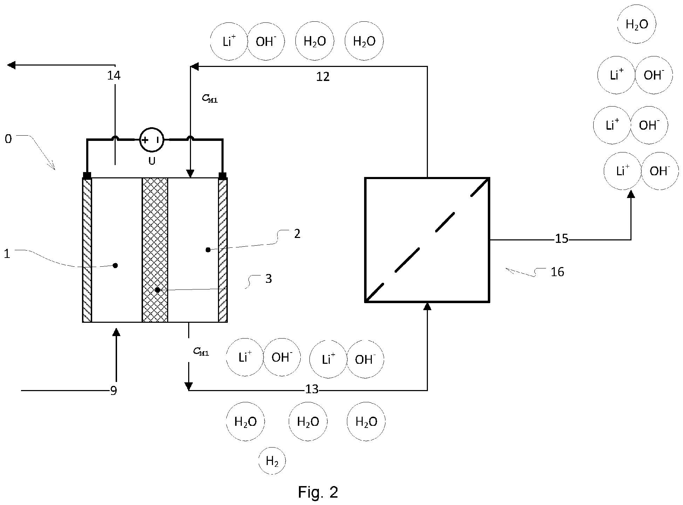

In Figur 2 ist dargestellt, wie das LiOH als Zielprodukt 15 aus dem reichen Arbeitsmedium 13 gewonnen wird.

Dazu wird ein Trennapparat 16 bereitgestellt, in welchen das reiche Arbeitsmedium 13 hineingefahren wird. Der Trennapparat 16 trennt von dem reichen Arbeitsmedium 13 das Zielprodukt 15 ab, welches eine besonders hohe Konzentration an LiOH hat. Das Zielprodukt enthält auch Wasser und Verunreinigungen, abhängig von der gewünschten Spezifikation des Zielprodukts.

Bei dem Trennapparat 16 kann es sich um eine Destillationskolonne oder um einen Kristallisator handeln.

Der um LiOH abgereicherte Ausgangsstrom des Trennapparts 16 wird als armes Arbeitsmedium 12 in das zweite Kompartiment 2 der elektrochemischen Zelle 0 rezykliert.

Wie bereits erwähnt, muss das arme Arbeitsmedium 12 eine gewisse Konzentration $C_{M0}$ an LiOH enthalten, damit der Prozess in der elektrochemischen Zelle 0 dank eines geringen Startwiderstands wie gewünscht anläuft. Die $C_{M0}$ soll mindestens 50 Gew.-ppm. betragen bezogen auf die Gesamtmasse des armen Arbeitsmediums 12. Damit die erforderliche Konzentration $C_{M0}$ gewährleistet ist, wird der Trennappart 16 so gefahren, dass er das LiOH nicht vollständig aus dem reichen Arbeitsmedium 13 abgetrennt.

Neben Lithiumhydroxid LiOH erzeugt der Prozess auch Wasserstoff $H_2$. Der Wasserstoff $H_2$ ist in dem reichen Arbeitsmedium 13 zumindest zu einem Teil gelöst und wird zusammen mit dem LiOH aus dem zweiten Kompartiment 2 abgezogen. Ein Teil des Wasserstoffs tritt im gasförmigen Zustand aus dem zweiten Kompartiment 2 aus.

Da der Wasserstoff $H_2$ leicht aus dem Wasser ausgast, braucht kein großer Aufwand betrieben werden, um ihn aus dem reichen Arbeitsmedium zu entfernen. Nur dann, wenn der Wasserstoff $H_2$ als zweites Zielprodukt verwertet werden soll, ist ein entsprechender zweiter Trennapparat vorzusehen, welcher der Wasserstoff separat in geeigneter Qualität/ Reinheit gewinnt (nicht dargestellt).

Das Wasser $H_2O$, welches in dem reichen Arbeitsmedium 13 enthalten ist, wird weitestgehend vollständig als armes Arbeitsmedium 12 rezykliert. Lediglich das in dem Zielprodukt 15 enthaltene Wasser geht aus dem Prozess verloren. Es muss entsprechend in das arme Arbeitsmedium 12 nachdosiert werden (nicht dargestellt). Das in dem Intermediat 9 enthaltene, aus dem Feed stammende Wasser gelangt nicht in den Kreislauf zwischen zweiten Kompartiment 2 und Trennapparat 16, weil die Membran 3 wasserundurchlässig ist.

**Beispiele**

**Versuchsaufbau und Durchführung**

Im Folgenden soll der Einfluss von Verunreinigungen in Form von Fremd-Ionen auf keramische, lithiumleitfähige Membranen während der Elektrolyse beschrieben werden. Des Weiteren werden die Auswirkungen von pH-Wert und Spannungstaktung beschrieben.

Zur Durchführung der Elektrolyse wird zunächst die Elektrolysezelle zusammengebaut und an Anolyt- und Katholyt-Behälter angeschlossen. Dabei wird darauf geachtet, dass Zu- und Rücklauf jeweils auf der gleichen Seite angeschlossen werden.

Als Anode und Kathode wurde jeweils eine runde Scheibe mit einem Durchmesser von 19.5 mm und einer Stärke von 1 mm verwendet. Bei dem Material handelte es sich jeweils um ein Titan-Streckblech, beidseitig beschichtet mit IrTi-Mischoxid, 12 g Ir/m2, 1 AF D1,5 mm von der Fa. Metakem GmbH, 61250 Usingen, Deutschland.

Die beprobten Membranen waren ebenfalls kreisrunde Scheiben mit einem Durchmesser von etwa 25 mm. Die Stärke der Membranen betrug etwa 1 mm. Das Material der beprobten Membranen wird in den einzelnen Beispielen angegeben.

Die Elektrolyse und die entsprechenden Vorlagebehälter sind während der gesamten Durchführung mit Stickstoff überlagert, um die Bildung von Lithiumcarbonat zu verhindern. Jede Zelle hat einen separaten Anolyt- und Katholyt-Behälter. Jeder Behälter wird mit etwa 1 kg Flüssigkeit gefüllt, die genaue Masse wird durch Rückwaage ermittelt. In allen Versuchen war der Katholyt immer eine 5mmol/L LiOH Lösung (entspricht 120 Gew. ppm LiOH). Der Anolyt ist jeweils eine Lithiumsalzlösung in verschiedenen Konzentrationen und verschiedenen Lithiumsalzen.

Durch Einschalten der Pumpen und der gewünschten Spannung wird der Versuch gestartet. Die maximale Durchflussgeschwindigkeit beträgt 900 mL/ Minute. Die Probenahme erfolgt halbstündlich oder nach Absprache in größeren Zeitintervallen. Es werden 3 mL Vorlauf gezogen und verworfen. Bei jeder Probenahme wird der jeweilige Strom notiert und von der Probe wird der pH-Wert und die Leitfähigkeit bestimmt. Anschließend werden die Proben in die entsprechenden Behälter zurückgegeben, um das Volumen nahezu konstant zu halten.

Nach Ende des Versuches werden die Behälter entleert und alle Leitungen und auch die Membran werden mit VE-Wasser gespült. Die Zelle wird auseinander gebaut, Membran wird fotografiert und es werden REM-Aufnahmen von Katholyt- und Anolytseite gemacht, um eventuelle Schädigungen oder Veränderungen der Membranen zu dokumentieren.

Es wurden einige Versuche mit pH-Wert Einstellung des Anolyten durchgeführt, um die Hypothese zu bestätigen, dass ein niedriger pH-Wert einen negativen Einfluss auf die Membranperformance nimmt. Versuche ohne pH-Wert Einstellung führten zu sehr schlechten Ergebnissen. Bei Versuchen mit pH-Wert Einstellung wird vor Versuchsbeginn der pH-Wert der Anolyt-Lösung mit der entsprechenden Dosis einer basischen Verbindung auf den gewünschten Bereich eingestellt. Sollte dieser während des Versuchs absinken, wird nachdosiert, um den pH-Wert zu halten. Im Vergleich dazu stehen Versuche, bei denen der pH-Wert gemäß dem natürlichen Verhalten der Lösungen während der Elektrolyse abnimmt.

Bei Versuchen mit Taktung der elektrischen Spannung wird in einem definierten Zeitintervall die Spannungsversorgung unterbrochen, sodass in der Zeit keine Spannung an der elektrochemischen Zelle anliegt. Über die Zeit verläuft die Spannung rechteckförmig, ohne Wechsel der Polarität. Dadurch soll die Membran in der Zeit ohne Spannung von möglichen störenden Ionen (H') freigespült werden, was die Membranschädigung vermindert und die Membranperformance erhöht.

Die Membranperformance wird an den Kenngrößen der Permeabilität (g Li*mm/m$^2$*h) und Permeanz (g Li/m$^2$*h) gemessen. Die Permeanz gibt an, wie viel Masse an Lithium pro Membranfläche und Zeit durch die Membran transportiert werden. Die Permeabilität bezieht noch die Membrandicke mit ein und ermöglicht es somit auch unterschiedliche Membrantypen mit verschiedenen Dicken miteinander zu vergleichen. Man benötigt beide Angaben zur umfänglichen Beschreibung der Performance, da extrem dünne Membranen eine enorm hohe Permeanz ermöglichen würden, aber sofern es zu Konzentrationspolarisationseffekten in der Membranzelle kommt, würden die Permeabilitäten falsch wiedergegeben. Die Berücksichtigung der Membrandicke ist dann nicht mehr zielführend, da der Transport nicht durch die Membran limitiert ist.

Alle in den Beispielen gezeigten Messwerte sind mit einem Mess-Fehler von ca. +/- 10% behaftet, der sich auf Ungenauigkeiten der Positionierung der Elektroden zueinander, der Bestimmungen der Dicke der Membranproben und der Konzentrationsbestimmung über Leitfähigkeitsmessungen zurückführen lässt.

Alle verwendeten Keramiken stammen von den in Tabelle 0 aufgeführten Herstellern und sind dort unter den entsprechenden Produktnamen bestellbar.

**Tabelle 0:** Verwendete Keramiken und deren Hersteller

| Hersteller | Produktname | Beschreibung | Stöchiometrie |
|---|---|---|---|
| OHARA GmbH | LICGC® PW01 | Ohara LiCGC® Pulver PW01 | $Li_{1,75}Al_{0,6}Ti_{1,4}Si_{0,15}P_{2,85}O_{12}$ |
| OHARA GmbH | AG01 | Ohara LiCGC® Keramik AG01 | $Li_2O$-$Al_2O_3$-$SiO_2$-$P_2O_5$-$TiO_2$-$GeO_2$ |
| OHARA GmbH | SP01 | Ohara LiCGC® Keramik SP01 | $Li_2O$-$Al_2O_3$-$SiO_2$-$P_2O_5$-$TiO_2$ |

(fortgesetzt)

| Hersteller | Produktname | Beschreibung | Stöchiometrie |
|---|---|---|---|
| Ampcera™ (sold by MSE Supplies) | LISICON LAGP Solid State Electrolyte Membrane for Advanced Lithium Batteries, diameter d=25.4 mm | Ampcera LAGP Keramik | $Li_{1.5}Al_{0.5}Ge_{1.5}(PO_4)_3$, |
| Toshima Manufacturing Co., Ltd. Materials System Division | Li0,33La0,55TiO3 d25×0.8mm | Toshima LLTO Keramik | $Li_{0,33}La_{0,55}TiO_3$ |

Lithiumhydroxid wurde von Aldrich in p.a. Qualität verwendet. Alle anderen Stoffe in technischen Qualitäten eingesetzt.

Sofern es nicht anders angegeben ist, wurden ca. 1mm dicke Membranen aus LATSP (LICGC®, Fa. Ohara) verwendet. Die Membranscheiben wurden durch ein SPS-Sinterverfahren bei einem Druck von $100*10^5$ Pa bis $200*10^5$ Pa und einer Temperatur von 950°C hergestellt, oder alternativ direkt in der für die Messzellen passenden Größe von verschiedenen Herstellern (Ohara, Ampcera, Toshima) bezogen.

**Beschreibung des Sinterverfahrens**

Sinterung mittels FAST/SPS

Das verwendete LATSP Pulver wird mittels FAST/SPS (engl.: field assisted sintering technology / spark plasma sintering) versintert. Die Sinterung wird mit einem Druck- und Temperaturanstieg simultan durchgeführt, um eine hohe Verdichtung und eine effektive Sinterung in sehr kurzer Sinterzeit zu erzielen. Der Aufbau der Sinterform besteht aus einer Grafit-Matrize mit einem Außendurchmesser von 80 mm, einem Innendurchmesser von 36 mm und einer Höhe von 55 mm, zwei Graphithalbschalen mit einer Wandstärke von 10 mm und dergleichen Höhe und zwei Graphit-Stempeln mit einem Durchmesser von 25 mm und einer Höhe von 30 mm. Die Halbschalen werden in die Matrize positioniert und ein Stempel von der Unterseite in die Halbschalen eingeführt. Bevor 2.5 g des Pulvers in die Matrize auf den unteren Stempel abgewogen werden, wird zur Verbesserung der Kontaktierung Graphitfolie auf den Stempel positioniert. Ist das Pulver eingewogen, wird eine zweite Graphitfolie auf dem Pulver positioniert und der obere Stempel in die Halbschalen eingeführt. Der Matrizenaufbau wird in der Ofenkammer des FAST/SPS-Ofens zwischen je zwei Platten aus kohlefaserverstärktem Graphit positioniert. Über den Verfahrweg der Elektroden wird der Aufbau kontaktiert und der gewünschte Druck aufgebaut. Zudem wird die Matrize über einen Wechselstrom erhitzt, wodurch in kurzer Zeit hohe Temperaturen erreicht werden. Nach einer langsamen Temperatursteigerung auf 250 °C über fünf Minuten wird mit einer Heizrate von 130 °C/min die Maximaltemperatur von 900 °C, welche für weitere fünf Minuten gehalten wird, erreicht. Während des Temperaturanstiegs wird auch der Druck innerhalb von fünf Minuten auf 43 MPa erhöht, welcher ebenfalls fünf Minuten gehalten wird. Am Ende der Haltezeit wird der Kontakt der oberen Elektrode von der Matrize gelöst und die Matrize kühlt ab. Anschließend kann die gesinterte Membran aus der Form herausgelöst werden.

**Beispiel 1 (LATSP)**

Zunächst wurde die Spannungsabhängigkeit der keramischen Membranen während der Elektrolyse untersucht. Die Elektrolysen wurden jeweils mit 0.1mol/L LiOH und 1mol/L LiOH durchgeführt bei Spannungen von 3 V bis 6 V. Die Messerergebnisse sind in Tabelle 1 dargestellt.

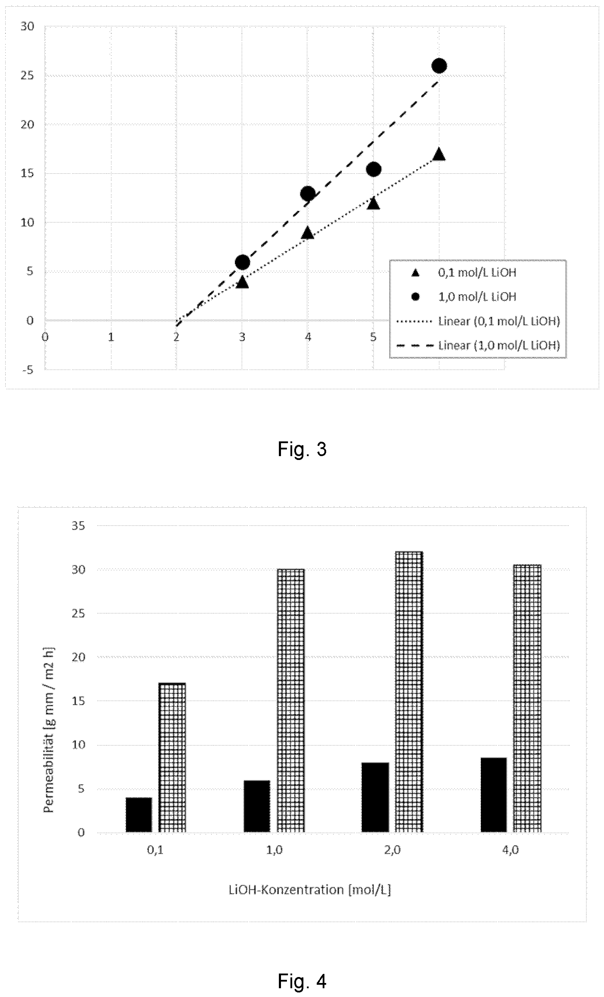

Bei grafischem Auftragen der Werte wird der lineare Zusammenhang deutlich. Der Schnittpunkt der Geraden der x-Achse bei ca. 2 V ergibt sich aus der Zersetzungsspannung des Wassers und den Innenwiderstände der Zelle. Dieser Schnittpunkt ist bei beiden Konzentrationen nahezu identisch. Die Graphik ist in Figur 3 dargestellt.

**Tabelle 1:** Spannungsabhängigkeit der Elektrolysen mit keramischen Membranen

| | Permeabilität | |
|---|---|---|
| Spannung | $(gLi*mm/m^2*h)$ | |
| [V] | 0.1 mol/L | 1 mol/L |
| 3 | 4 | 6 |

(fortgesetzt)

| Spannung | Permeabilität | |
| | (gLi*mm/m²*h) | |
| [V] | 0.1 mol/L | 1 mol/L |
| 4 | 9 | 13 |
| 5 | 12 | 15.5 |
| 6 | 17 | 26 |

**Beispiel 2 (LATSP)**

Außerdem wurde festgestellt, dass die Membranperformance unabhängig von der Anolyt-Konzentration ist. Dazu wurden Elektrolysen jeweils mit 0.1; 1.0; 2.0mol/L LiOH und 4,0mol/L LiOH, welches im Anolyt-Behälter vorgelegt wurde, bei Spannungen von 3 V und 6 V durchgeführt.

Die molaren Anteile an LiOH entsprechen den folgenden Gewichtsanteile an Li:

$$0.1 \text{ mol/L } = 700 \text{ ppm Li } = 2400 \text{ ppm LiOH}$$

$$1.0 \text{ mol/L } = 7000 \text{ ppm Li } = 24000 \text{ ppm LiOH}$$

$$2.0 \text{ mol/L } = 14000 \text{ ppm Li } = 48000 \text{ ppm LiOH}$$

$$4.0 \text{ mol/L } = 28000 \text{ ppm Li } = 96000 \text{ ppm LiOH}$$

Die Messerergebnisse sind in Tabelle 2 dargestellt. Bei Konzentrationen von 1 mol/L bis 4 mol/L wird keine signifikante Steigerung der Membranperformance gemessen. Eine LiOH Konzentration von 0.1 mol/L erreicht eine leicht geringere Performance. Eine graphische Darstellung zeigt Figur 4.

**Tabelle 2:** Keine Abhängigkeit von der Anolyt-Konzentration

| Anolyt-Konzentration | Permeabilität | |
| [mol/L] | (gLi*mm/m²*h) | |
| | 3 V | 6 V |
| 0.1 | 4 | 17 |
| 1 | 6 | 30 |
| 2 | 8 | 32 |
| 4 | 8.5 | 30.5 |

**Beispiel 3 (LATSP)**

Die Elektrolyse wurden jeweils mit 0.1mol/L Lithium des entsprechenden Lithiumsalzes im Anolyt-Kreislauf bei 3 V, 4V und 6 V durchgeführt. Die Permeabilitäten sind zu Beginn eines Versuchs nach kurzer Laufzeit (in Klammern angegeben) in einer vergleichbaren Größenordnung. Beim Lithiumhydroxid und beim Lithiumcarbonat lässt sich die Permeabilität wie erwartet durch eine höhere Spannung steigern, bei Lithiumchlorid und Lithiumsulfat nimmt hingegen die Permeabilität mit längerer Laufzeit, bei den höheren Spannungen ab.

Eine pH-Wert-Bestimmung zum Ende des jeweiligen Versuchs zeigte, dass die pH-Werte der Lithiumchlorid und der Lithiumsulfat-Lösung auf pH 3 bis 4 gesunken waren.

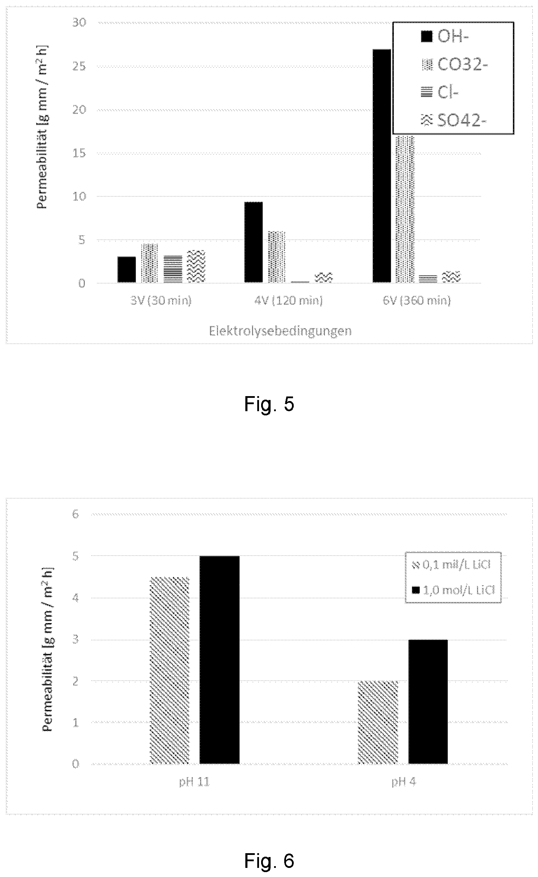

Messwerte sind in Tabelle 3 dargestellt. Eine graphische Darstellung bietet Figur 5.

**Tabelle 3:** Einfluss der Anionen auf die Permeabilität

| Anionen-Permeabilität | | | |
|---|---|---|---|
| | (gLi*mm/m$^2$*h) | | |
| | 3V (30 min) | 4V (120 min) | 6V (360 min) |
| OH$^-$ | 3.1 | 9.4 | 27 |
| Cl$^-$ | 3.2 | 0.3 | 0.9 |
| SO4$^{2-}$ | 3.8 | 1.2 | 1.4 |
| CO3$^{2-}$ | 4.5 | 6.0 | 17 |

**Beispiel 4 (LATSP)**

Um den Einfluss des pH-Wertes des Anolyt-Kreislaufs auf die Membranperformance während der Elektrolyse genauer zu betrachten, wurde ein Vergleich mit Lithiumchlorid bei einer Konzentration von 0.1 mol/L und 1.0 mol/L, bei einem pH-Wert von 4 und 11 und bei einer Elektrolysespannung von 3 V durchgeführt. Die pH-Wert Einstellung erfolgte mit wenigen Tropfen einer 1.0 mol/L Lithiumhydroxid-Lösung. Bei beiden Konzentrationen wird durch den erhöhten pH-Wert, eine Steigerung der Permeabilität erzielt. Bei den Elektrolysen mit LiCl-Lösungen ohne pH-Wert Einstellung mit Lithiumhydroxid sinkt der pH-Wert des Anolyten kontinuierlich, daher ist die Permeabilität in diesen Messungen bei Korrelation mit dem pH-Wert mit einem Fehler behaftet, da dieser nicht über lange Zeit konstant gehalten werden konnte.
Ergebnisse berichtet Tabelle 4. Eine graphische Darstellung bietet Figur 6.

**Tabelle 4:** Einfluss des pH-Wertes auf die Permeabilität // Einstellung mit LiOH

| Konzentration | Permeabilität | |
|---|---|---|
| [mol/L] | (gLi*mm/m$^2$*h) | |
| | pH 11 | pH 4 |
| 0.1 | 4.5 | 2 |
| 1 | 5 | 3 |

**Beispiel 5**

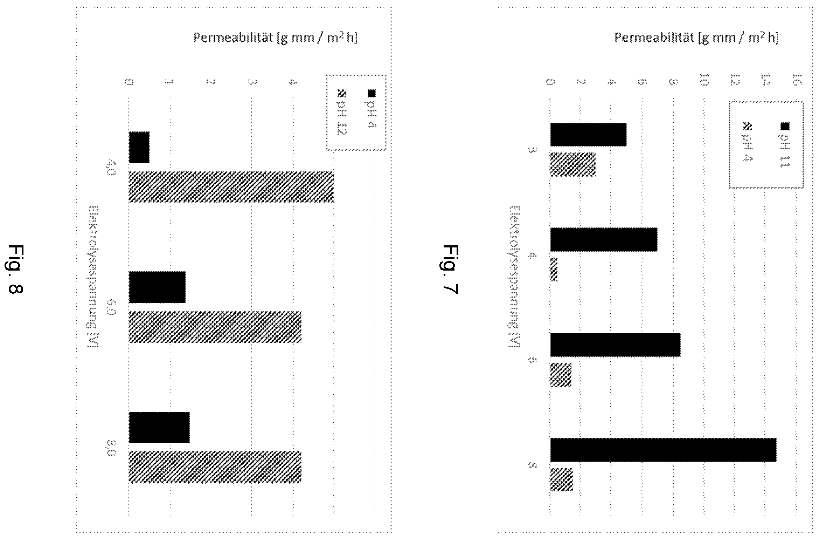

In einem 24 Stunden-Versuch wurde der Einfluss des pH-Wertes des Anolyt-Kreislaufs bei Erhöhung der Spannung mit einer 1.0 mol/L LiCl-Lösung getestet.
Ein niedriger pH-Wert und eine erhöhte Spannung (3 bis 8 V) führen nicht zu stabilen gleichbleibenden Permeabilitäten. Der pH-Wert variiert je nach Laufzeit, bis er sich im Versuchsablauf auf ca. pH 4 einstellt und somit auch die Permeabilität keinen konstanten Wert über die Versuchszeit annimmt.
Bei Einstellung des pH-Wertes über eine Zugabe von wenig LiOH-Lösung, stabilisieren sich die Permeabilitäten auf einem hohen Niveaus. Die Ergebnisse, welche sich nach ca. 3 bis 5 Stunden einstellen, sind in Tabelle 5 zusammengestellt. Eine graphische Darstellung bietet Figur 7.

**Tabelle 5:** Abhängigkeit der Permeabilität von pH-Wert und Spannung

| Spannung | Permeabilität | |
|---|---|---|
| [V] | (gLi*mm/m$^2$*h) | |
| | pH 11 | pH 4 |
| 3 | 5 | 3 |
| 4 | 7 | 0.5 |
| 6 | 8.5 | 1.4 |
| 8 | 14.7 | 1.5 |

**Beispiel 6 (LATSP)**

Da eine pH-Wert Einstellung mit Lithiumhydroxid nicht praktikabel wäre, wurde in diesem Versuch der pH-Wert des Anolyt-Kreislaufs mit Calciumhydroxid (Ca(OH)$_2$) eingestellt. Da Calciumhydroxid schwer löslich ist, gestaltet sich die Nachdosierung bei Abfallen des pH-Wertes schwierig: Das Intermediat enthielt Feststoffanteile und war leicht trüb. Der Versuch wurde mit einer 0.1 mol/L Lithiumchlorid Lösung durchgeführt, deren pH-Wert mit Ca(OH)$_2$ auf 12 eingestellt wurde.

Die Einstellung des pH-Wertes mit Ca(OH)$_2$ führt zu einem deutlichen Anstieg der Membranpermeabilität um mehr als 50 %. Ergebnisse sind in Tabelle 6 zusammengestellt. Eine graphische Darstellung bietet Figur 8.

**Tabelle 6:** Einfluss des pH-Wertes auf die Permeabilität // Einstellung per Ca(OH)$_2$

| Spannung | Permeabilität | |
|---|---|---|
| [V] | (gLi*mm/m$^2$*h) | |
| | pH 4 | pH 12 |
| 4 | 0.5 | 5 |
| 6 | 1.4 | 4.2 |
| 8 | 1.5 | 4.2 |

**Beispiel 7 (LATSP)**

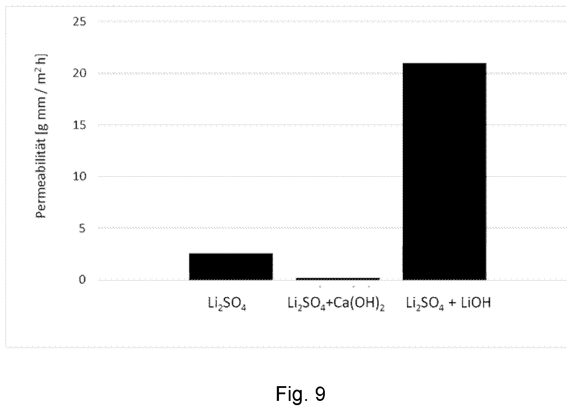

Auch bei Lithiumsulfat Li$_2$SO$_4$ als Salz im Anolyt-Kreislauf sinkt der pH-Wert während der Elektrolyse ab und die Membran wird geschädigt. Eine pH-Wert Einstellung mit Ca(OH)$_2$ führt in diesem Fall aber nicht zu einer Verbesserung der Membranperformance, da sich schwerlösliches CaSO$_4$ bildet, welches sich auf der Membran abscheidet. Eine pH-Wert-Einstellung mit 1.0 mol/L LiOH-Lösung führt nicht zur Belagbildung auf der der Membrane und zu der starken Abnahme der Permeabilität, sondern verbessert diese. Ergebnisse berichtet Tabelle 7. Eine graphische Darstellung bietet Figur 9.

**Tabelle 7:** Einfluss von Li$_2$SO$_4$ auf die Permeabilität

| Anolyt-Inhaltsstoffe | Spannung | pH-Wert | Permeabilität |
|---|---|---|---|
| | [V] | | (gLi*mm/m$^2$*h) |
| Li2SO4 | 6 | 2.7 | 2.6 |
| Li2SO4 + Ca(OH)2 | 6 | 12 | 0.2 |
| Li2SO4 + LiOH | 6 | 12 | 21 |

**Beispiel 8 (LATSP)**

Lithiumcarbonat als Salz im Anolyt zeigt ein anderes Verhalten als Lithiumchlorid und -sulfat. Bei 4 V ist die Performance der Membran etwas niedriger aber bei 6 V. Zwischen 8 V und 10 V pendelt sich die Permeabilität auf einem stabilen Level ein, sodass eine Erhöhung der Spannung nicht zu einer Erhöhung der Permeabilität führt.

Dies ist auf die begrenzte Löslichkeit des Lithiumcarbonats zurückzuführen, die nur eine maximale Konzentration von ca. 0.15 mol/L zulässt. Wie bereits in Beispiel 2 ausgeführt, ist die Permeabilität bei geringeren Lithium-Konzentrationen geringer. Zudem ist die pH-Wert-Erhöhung durch Zugabe von Ca(OH)$_2$ aufgrund des puffernden Effektes des Li$_2$CO$_3$ nur in einem begrenzten Umfang möglich. Dieses zusammen genommen ist für das im Vergleich zu LiCl und Li$_2$SO$_4$ unterschiedliche Verhalten des Li$_2$CO$_3$ im Elektrolyseversuch verantwortlich. Ergebnisse sind in Tabelle 8 belegt.

**Tabelle 8:** Einfluss der Ca(OH)$_2$-Zugabe auf die Permeabilität bei Verwendung von LiCl, Li$_2$SO$_4$ und Li$_2$CO$_3$ auf die Permeabilität

| Spannung | Permeabilität | | |
|---|---|---|---|
| [V] | [ gLi*mm/m$^2$*h ] | | |
| | LiCl | Li$_2$CO$_3$ | Li$_2$SO$_4$ |
| 4 | 6.1 | 2.1 | |
| 6 | 4.5 | 11 | 0.2 |
| 8 | 4.5 | 11.2 | |
| 10 | | 10.8 | 0.4 |

**Beispiel 9 (LATSP)**

Um eine Permeabilitätsbeeinträchtigung durch die zugesetzte Ca(OH)2-Lösung zu minimieren, wurden Versuche mit zusätzlicher Taktung der Spannung durchgeführt. Es wurden zwei verschiedene Taktungsintervalle getestet. Bei Taktungsintervall 1 wird die Spannung 10 Sekunden eingeschaltet und dann 2 Sekunden ausgeschaltet Damit wird eine Steigerung der Permeabilität um 25 % erreicht.

Bei Taktungsintervall 2 wir die Spannung 50 Sekunden eingeschaltet und 10 Sekunden ausgeschaltet und es wird eine Verbesserung der Permeabilität von 61 % erzielt.

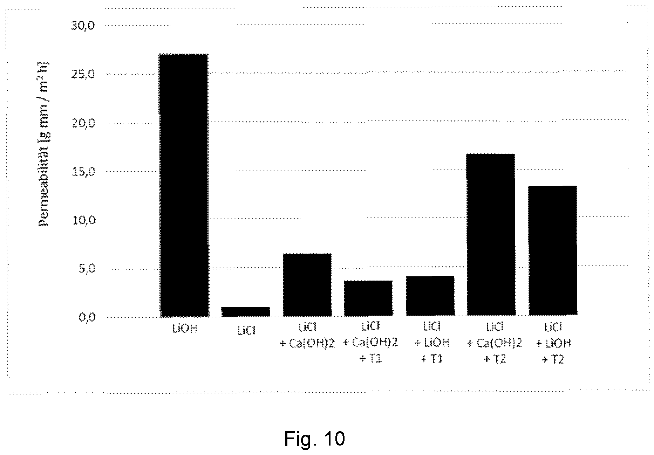

In Tabelle 9 wird jeweils ein Versuch mit Lithiumchlorid in verschiedenen Kombinationsmöglichkeiten mit Taktungsintervall 1 und 2, pH-Wert Einstellung mit LiOH und Ca(OH)$_2$ verglichen. Die Referenz dazu ist der Vergleichswert von Lithiumhydroxid. Am besten performt hier Lithiumchlorid mit Ca(OH)$_2$ und Taktungsintervall 2. Alle Versuche wurden mi 0.1 mol/L LiCl, 6 V und 900ml/min Überströmungsgeschwindigkeit gefahren. Die Ergebnisse sind in Tabelle 9 dargestellt, eine graphische Darstellung findet sich in Figur 10.

**Tabelle 9:** Einfluss der Taktung der Spannung, Wechselwirkung mit Zugabe von Ca(OH)$_2$

| Einflussfaktor | Permeabilität [g mm / m$^2$ h ] |
|---|---|
| LiOH | 27.0 |
| LiCl | 1.0 |
| LiCl + Ca(OH)2 | 6.4 |
| LiCl + Ca(OH)2 + T1 | 3.6 |
| LiCl + LiOH + T1 | 4.0 |
| LiCl + Ca(OH)2 + T2 | 16.6 |
| LiCl + LiOH + T2 | 13.3 |

**Beispiel 10 (Testung verschiedener LiSICon-Materialien)**

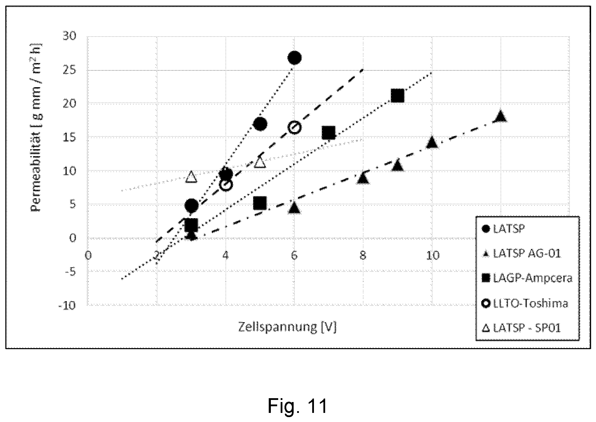

Die Beschreibung der verschiedenen LiSICon Materialien im elektrochemischen Prozess der Lithium-Hydroxid- und Wasserstoff-Produktion erfolgt über die Bestimmung der Permeabilität bei verschiedenen Spannungen für eine basische 1.0 mol/L Lithiumhydroxid-Lösung als Anolyt. Die Ergebnisse sind in Figur 11 dargestellt.

Hieraus lassen sich sehr gut die Eigenschaften der Materialien ableiten; allerdings ist auch zu beachten, dass ein Material mit geringerer Permeabilität gut im beschriebenen Prozess verwendet werden kann, wenn die Materialien zu dünnen Membranen verarbeiten werden.

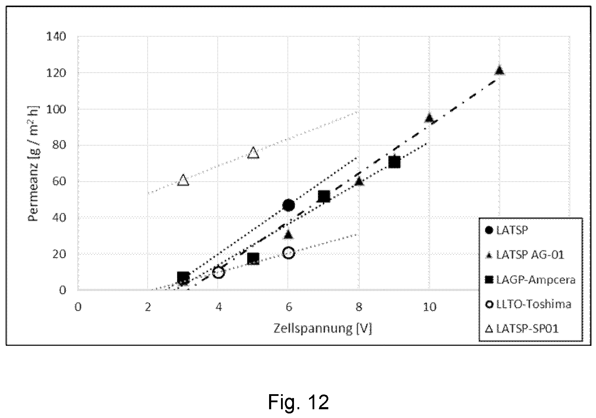

Die untersuchten Materialien sind in Tabelle 0 angegeben. In den Legende der Figuren 11 und 12 stehen LATSP für LICGC® PW01, LATSP-AG-01 für LiCGC® AG01, LATSP-SP01 für LiCGC® SP-01 von Ohara. LAGP steht für das Ampcera-Material und LLTO für das von Toshima.

Alternativ kann das Verhalten der verschiedenen Keramiken auch über die jeweilige Permeanz beschrieben werden (Fig. 12). Diese Darstellung ist bei einer Limitierung des Stofftransportes in der Elektrolysezelle geeigneter. Der Grund, warum das LATSP SP01 in dieser Darstellung von den anderen untersuchten LiSICons abweicht, liegt möglicherweise darin, dass dieses Material mit 0.15 mm sehr dünn ist und daher nicht so stabil ist wie die anderen untersuchten Materialien.

Die den Figuren 11 und 12 zugrundeliegende Messwerte sind in Tabelle 13 dargestellt:

**Tabelle 13:** Messwerte zu Beispiel 10

| MembranMaterial | Spannung [V] | Permeabilität [g mm / m2 h] | Permeanz [g / m2 h] |
|---|---|---|---|
| LATSP | 3.0 | 4.8 | 6.7 |
| LATSP | 4.0 | 9.6 | |
| LATSP | 5.0 | 17.0 | |
| LATSP | 6.0 | 26.8 | 47.0 |
| LAGP-Ampcera | 3.0 | 5.8 | |
| LAGP-Ampcera | 6.0 | 20.5 | |
| LAGP-Ampcera | 9.0 | 34.0 | |
| LAGP-Ampcera | 3.0 | 2.0 | 6.8 |
| LAGP-Ampcera | 5.0 | 5.2 | 17.4 |
| LAGP-Ampcera | 7.0 | 15.6 | 51.9 |
| LAGP-Ampcera | 9.0 | 21.2 | 70.5 |
| LATSP-AG-01 | 3.0 | 0.8 | 5.6 |
| LATSP-AG-01 | 6.0 | 4.7 | 31.2 |
| LATSP-AG-01 | 8.0 | 9.1 | 60.5 |
| LATSP-AG-01 | 9.0 | 10.9 | 72.8 |
| LATSP-AG-01 | 10.0 | 14.4 | 95.7 |
| LATSP-AG-01 | 12.0 | 18.3 | 122.0 |
| LLTO-Toshima | 4.0 | 8.0 | 10.0 |
| LLTO-Toshima | 6.0 | 16.5 | 20.6 |
| LATSP-SP01 | 3.0 | 9.2 | 61.0 |
| LATSP-SP01 | 5.0 | 11.4 | 76.0 |

**Beispiel 11 (LAGP)**

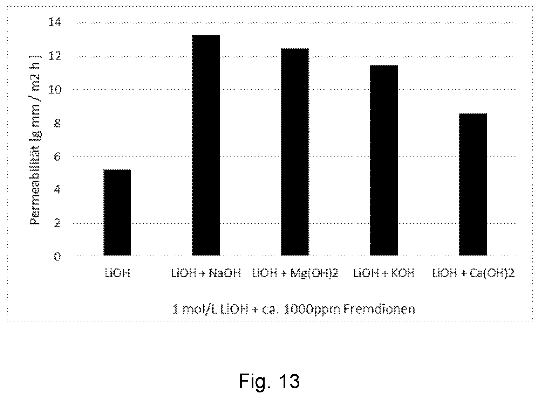

Eine basische Anolyt-Lösung wurde mit je ca. 1000 ppm (g/g) der folgenden Kationen verunreinigt: Natrium; Kalium; Magnesium; Calcium. Mit Hilfe einer LAGP-Membrane der Fa. Ampcera lässt sich das Lithium aus der Lösung mit den in der in Figur 13 zusammengestellten Permeabilitäten in den Katholyt überführen. Alle Katholyten (gereinigtes LiOH) enthielten gemäß ionenchromatographischer Analyse weniger als 10 ppm der entsprechenden Verunreinigungen. Es wurde jeweils eine Taktung der Spannung von 5 V wie in Beispiel 9, Taktung 2 angewendet.

**Beispiel 12 (LATSP)**

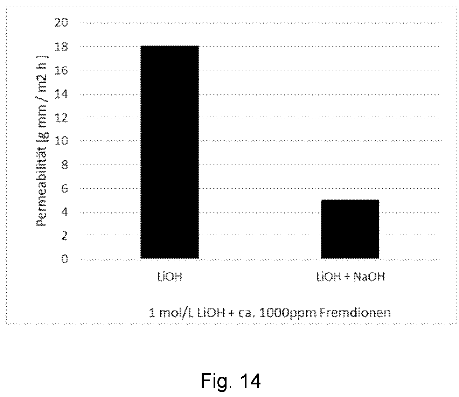

Eine basische Anolyt-Lösung mit ca. 1000 ppm Natrium-Ionen verunreinigt. Mit Hilfe einer LATSP-Membran (LICGC PW01, Ohara, gesintert wie in oben beschrieben) lässt sich das Lithium aus der Lösung mit der in Figur 14 dargestellten Permeabilität in dem Katholyt anreichern. Als Vergleich ist die Permeabilität in Abwesenheit von Na angegeben. Die Zellspannung betrug 5V, getaktet mit der Taktung T2, wie in Beispiel 9 beschrieben. Das gereinigte LiOH enthielt gemäß ionenchromatographischer Analyse weniger als 10 ppm Natrium-Ionen.

**Ionenchromatographische Analyse**

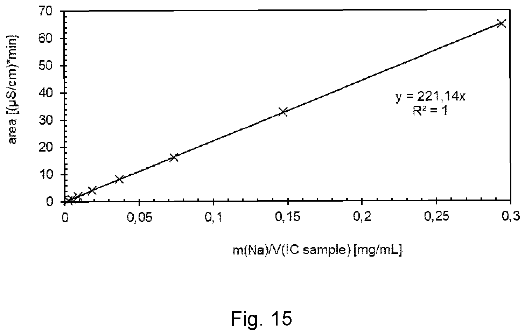

In den Beispielen 11 und 12 wurde die Gehalte an Li und Na-Ionen in Anolyt und Katholyt per Ionenchromatographie (ion-exchange chromatography - IEC) wie folgt bestimmt:
Die Proben wurden vor der Messung mit Hilfe eines Spritzenfilter (Typ Chromafil®Xtra MV-20/25, Porengröße 0.20 μm, für wässrige und polare Medien) gefiltert.
Vor der Untersuchung wurde das IEC Gerät (Metrohm IC 930 Compact, C Supp C6 250/4.0, Standard (1.7 mM HNO₃, 1.7 mM Dipicolinsäure), Leitfähigkeitssensor) referenziert und extern auf Li und Na kalibriert. Die verwendeten Kalibrierlinien sind in den Figuren 15 (für Na) und 16 (für Li) dargestellt.

**Fazit**

Die Versuche zeigen, dass die Permeabilität der untersuchten Membranen sich durch Anwesenheit von Li-Sulfat, Li-Chlorid und Li-Carbonat verschlechtert. Der schädigende Einfluss lässt sich aber durch Zugabe von Hydroxiden, wie Ca(OH)$_2$, aber auch von LiOH zurückdrängen, insbesondere, wenn die elektrische Spannung getaktet wird. Eine hohe Permeabilität ist die Voraussetzung für eine hohe Effizienz des Prozesses. Daher helfen die gefundenen Maßnahmen den Prozess effizienter zu fahren.

**Bezugszeichenliste**

0     elektrochemische Zelle
1     erstes Kompartiment
2     zweites Kompartiment
3     Membran
4     Anode
5     Kathode
6     erste elektrische Leitung
7     Spannungsquelle
8     zweite elektrische Leitung
9     Intermediat
10    Feed
11    basische Verbindung
12    armes Arbeitsmedium
13    reiches Arbeitsmedium
14    Abwasser
15    Zielprodukt
16    Trennapparat

$H_2O$    Wasser
$H_2$     Wasserstoff
$O_2$     Sauerstoff
LiOH    Lithiumhydroxid
$OH^-$    OH-Anionen
$Li^+$    Lithium Kationen

U     elektrische Spannung
I     elektrischer Strom
A     aktive Fläche
$C_F$    Konzentration LiOH im Feed
Cw    Konzentration LiOH im Abwasser
$C_{M0}$    Konzentration LiOH im armen Arbeitsmedium
$C_{M1}$    Konzentration LiOH im reichen Arbeitsmedium

**Patentansprüche**

1.  Verfahren zur Herstellung von Wasserstoff und Lithiumhydroxid mit den folgenden Schritten:

    a) Bereitstellen eines Feed enthaltend zumindest Wasser, Li-Kationen, Anionen, sowie Verunreinigungen, wobei die Konzentration von Li-Kationen in dem Feed $C_F$ mindestens 200 Gew.-ppm oder zwischen 500 Gew.-ppm und 140000 Gew.-ppm beträgt, jeweils bezogen auf das Gesamtgewicht des Feeds, wobei der bei 25°C mittels Glaselektrode gemessene pH-Wert des Feeds zwischen 2 und 9 beträgt;
    b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt;

c) Bereitstellen einer basischen Verbindung;

d) Bereitstellen von mindestens einer elektrochemischen Zelle, wobei die elektrochemische Zelle die folgenden Merkmale aufweist:

i. die elektrochemische Zelle umfasst ein erstes Kompartiment, in dem eine Anode angeordnet ist;

ii. die elektrochemische Zelle umfasst ein zweites Kompartiment, in dem eine Kathode angeordnet ist;

iii. die elektrochemische Zelle umfasst eine Membran, welche das erste Kompartiment von dem zweiten Kompartiment trennt, wobei die Membran die Fläche A aufweist;

iv. die Membran enthält ein anorganisches Material, welches eine Leitfähigkeit für Li-Ionen besitzt und welches elektrisch isolierend ist;

e) Bereitstellen von mindestens einer elektrischen Spannungsquelle, welche über eine erste elektrische Leitung mit der Anode und über eine zweite elektrische Leitung mit der Kathode verbunden ist;

f) Dosierung der basischen Verbindung zu dem Feed, sodass ein Intermediat erhalten wird, wobei der mittels Glaselektrode bei 25°C gemessene pH-Wert des Intermediats zwischen 9 und 13 beträgt,

g) Beaufschlagen des ersten Kompartiments mit dem Intermediat;

h) Beaufschlagen des zweiten Kompartiments mit dem armen Arbeitsmedium;

i) Beaufschlagen der elektrochemischen Zelle mit einer von der elektrischen Spannungsquelle bezogenen elektrischen Spannung $U$, dergestalt, dass ein elektrischer Strom $1$ zwischen Anode und Kathode fließt, wobei der Quotient $Q$ aus der Stromstärke des elektrischen Stroms $I$ und der Fläche $A$ der Membran zwischen 100 A/m$^2$ und 500 A/m$^2$ oder zwischen 150 A/m$^2$ und 350 A/m$^2$ beträgt;

j) Abziehen von Abwasser enthaltend zumindest Wasser, darin gelöste Li-Salze, Sauerstoff, sowie Verunreinigungen aus dem ersten Kompartiment, wobei die Konzentration von Li-Ionen in dem Abwasser Cw bezogen auf das Gesamtgewicht des Abwassers geringer ist als die Konzentration von Li-Ionen im Feed $C_F$;

k) Abziehen eines reichen Arbeitsmediums enthaltend Wasser und Lithiumhydroxid sowie Wasserstoff aus dem zweiten Kompartiment, wobei die Konzentration von Lithiumhydroxid in dem reichen Arbeitsmedium $C_{M1}$ bezogen auf das Gesamtgewicht des reichen Arbeitsmediums größer ist als die Konzentration im von Lithiumhydroxid in dem armen Arbeitsmedium $C_{M0}$.

2. Verfahren nach Anspruch 1, **dadurch gekennzeichnet, dass** die basische Verbindung ausgewählt ist aus der Gruppe bestehend aus Ca(OH)$_2$, KOH, NaOH, LiOH, NH$_4$OH.

3. Verfahren nach Anspruch 2, **dadurch gekennzeichnet, dass** es sich bei der basischen Verbindung um Ca(OH)$_2$ handelt.

4. Verfahren nach Anspruch 1, 2 oder 3, **dadurch gekennzeichnet, dass** der bei 25°C mittels Glaselektrode gemessene pH-Wert des Intermediats zwischen 9 und 12 beträgt.

5. Verfahren nach einem der Ansprüche 1 bis 4, **dadurch gekennzeichnet, dass** die im Feed enthaltenden Anionen ausgewählt sind aus der Gruppe bestehend aus Sulfat, Carbonat, Hydroxid, Chlorid, Fluorid.

6. Verfahren nach einem der Ansprüche 1 bis 5, **dadurch gekennzeichnet, dass** der Feed Verunreinigungen in Gestalt von Verbindungen von Elementen enthält, welche ausgewählt sind aus der Gruppe bestehend aus B, Na, Mg, Al, Si, K, Ca, Mn, Fe, Co, Ni, Cu, C.

7. Verfahren nach einem der vorhergehenden Ansprüche, wobei das in der Membran enthaltene anorganische Material eine nach der hier beschriebenen Methode "Impedanz Spektroskopie" gemessene, spezifische Leitfähigkeit für Li-Ionen $\sigma$ besitzt, die bei einer Temperatur von 23°C mindestens 1*10$^{-5}$ S/m oder mindestens 5*10$^{-5}$ S/m oder mindestens 10*10$^{-5}$ S/m und maximal 100*10$^{-5}$ S/m beträgt.

8. Verfahren nach Anspruch 7, **dadurch gekennzeichnet, dass** es sich bei dem anorganischen Material um eine Verbindung der folgenden Stöchiometrie (LATP) handelt:

$$Li_{1+x}Al_xTi_{2-x}(PO_4)_3$$

worin gilt: 0.1≤x≤0.3, wobei bevorzugt gilt x=0.3.

9. Verfahren nach Anspruch 7, **dadurch gekennzeichnet, dass** es sich bei dem anorganischen Material um eine Verbindung der folgenden Stöchiometrie (LATSP) handelt:

$$Li_{1+x+y}Al_xTi_{2-x}Si_yP_{3-y}O_{12}$$

worin gilt: $0.1 \leq x \leq 0.3$ und $0.2 \leq y \leq 0.4$.

10. Verfahren nach Anspruch 7, **dadurch gekennzeichnet, dass** es sich bei dem anorganischen Material um eine Verbindung der folgenden Stöchiometrie (LAGTSP) handelt:

$$Li_{1+x+y}Al_xTi_{2-x}Si_yP_{3-y}O_{12} * nGeO_2$$

worin gilt: $0 \leq x \leq 1$ und $0 \leq y \leq 1$ und $0 \leq n \leq 1$

11. Verfahren nach Anspruch 7, **dadurch gekennzeichnet, dass** es sich bei dem anorganischen Material um eine Verbindung der folgenden Stöchiometrie (LAGTP) handelt:

$$Li_{1.4}Al_{0.4}(Ge_{1-x}Ti_x)_{16}(PO_4)_3$$

worin gilt: $0 \leq x \leq 1$.

12. Verfahren nach Anspruch 7, **dadurch gekennzeichnet, dass** es sich bei dem anorganischen Material um eine Verbindung der folgenden Stöchiometrie (LAGP) handelt:

$$Li_{1+x}Al_xGe_{2-x}(PO_4)_3$$

worin gilt: $x=0$ oder $x=0.2$ oder $x=0.4$.

13. Verfahren nach Anspruch 7, **dadurch gekennzeichnet, dass** es sich bei dem anorganischen Material um eine Verbindung der folgenden Stöchiometrie (LLTO) handelt:

$$Li_{3x}La_{(2/3)-x\square(1/3)-2x}TiO_3$$

worin gilt: $0 \leq x \leq 0.16$.

14. Verfahren nach einem der vorhergehenden Ansprüche mit den zusätzlichen Schritten:

> m) Bereitstellen eines Trennapparates;
> n) Abtrennen von Lithiumhydroxid aus dem reichen Arbeitsmedium mit Hilfe des Trennapparates.

15. Verfahren nach Anspruch 14, **dadurch gekennzeichnet, dass** bei dem Schritt

> n) Abtrennen von Lithiumhydroxid aus dem reichen Arbeitsmedium mit Hilfe des Trennapparates;

> > das arme Arbeitsmedium erhalten wird,
> > dergestalt, dass der Schritt

> b) Bereitstellen eines armen Arbeitsmediums enthaltend Wasser und darin gelöst Lithiumhydroxid, wobei die Konzentration von Lithiumhydroxid in dem armen Arbeitsmedium $C_{M0}$ bezogen auf das Gesamtgewicht des armen Arbeitsmediums mindestens 50 Gew.-ppm beträgt;
> mit Hilfe des Trennapparates erfolgt.

16. Verfahren nach Anspruch 14 oder 15, **dadurch gekennzeichnet, dass** die elektrochemische Zelle und der Trennapparat an demselben Ort bereitgestellt werden.

17. Verfahren nach einem der Ansprüche 1 bis 16, **dadurch gekennzeichnet, dass** zumindest die elektrochemische Zelle kontinuierlich betrieben wird.

18. Verfahren nach einem der Ansprüche 1 bis 17, **dadurch gekennzeichnet, dass** die Herstellung von Wasserstoff und Lithiumhydroxid zeitgleich erfolgt.

19. Verfahren nach einem der vorhergehenden Ansprüche 1 bis 18, **dadurch gekennzeichnet, dass** sich die von der elektrischen Spannungsquelle bezogene elektrische Spannung sich über die Zeit periodisch verändert.

20. Verfahren nach Anspruch 19, **dadurch gekennzeichnet, dass** die von der elektrischen Spannungsquelle bezogene elektrische Spannung sich über die Zeit wellenförmig verändert, wobei die Wellenform ausgewählt ist aus der Gruppe bestehend aus den folgenden Wellenformen: Sinus, Rechteck, Dreieck, Sägezahn.

21. Verfahren nach Anspruch 20, wobei die Wellenform rechteckig ist, nämlich gebildet von einem ersten Wellen-Abschnitt, in dem die Spannung mit einem konstanten Wert eingeschaltet ist und einem auf den ersten Wellen-Abschnitt folgenden zweiten Wellen-Abschnitt, bei dem die Spannung ausgeschaltet ist, wobei die Länge des ersten Wellen-Abschnitts $\lambda_1$ beträgt, wobei die Länge des zweiten Wellen-Abschnitts $\lambda_2$ beträgt und wobei gilt $\lambda_1 = \phi^* \lambda_2$ mit $3 < \phi < 7$.

22. Verfahren nach Anspruch 19 oder 20 oder 21, **dadurch gekennzeichnet, dass** die Polarität der elektrischen Spannung beibehalten wird.

23. Verfahren nach einem der Ansprüche 1 bis 22, **dadurch gekennzeichnet, dass** sowohl in dem ersten Kompartiment als auch in dem zweiten Kompartiment ein pH-Wert von 9 bis 13 herrscht; pH-Wert gemessen bei 25°C mit Glaselektrode.


**Claims**

1. Process for producing hydrogen and lithium hydroxide, comprising the following steps:

   a) providing a feed comprising at least water, Li cations, anions, and also impurities, the concentration of Li cations in the feed $C_F$ being at least 200 ppm by weight or between 500 ppm by weight and 140 000 ppm by weight, in each case based on the total weight of the feed, the pH of the feed measured at 25°C using a glass electrode being between 2 and 9;
   b) providing a poor working medium comprising water and lithium hydroxide dissolved therein, the concentration of lithium hydroxide in the poor working medium $C_{M0}$, based on the total weight of the poor working medium, being at least 50 ppm by weight;
   c) providing a basic compound;
   d) providing at least one electrochemical cell, wherein the electrochemical cell has the following properties:

      i. the electrochemical cell includes a first compartment in which an anode is arranged;
      ii. the electrochemical cell includes a second compartment in which a cathode is arranged;
      iii. the electrochemical cell includes a membrane that separates the first compartment from the second compartment, the membrane having the area A;
      iv. the membrane comprises an inorganic material that possesses conductivity for Li ions and that is electrically insulating;

   e) providing at least one electrical voltage source that is connected to the anode via a first electrical lead and to the cathode via a second electrical lead;
   f) metering the basic compound into the feed such that an intermediate is obtained, the pH of the intermediate measured at 25°C using a glass electrode being between 9 and 13;
   g) charging of the first compartment with the intermediate;
   h) charging of the second compartment with the poor working medium;
   i) charging of the electrochemical cell with an electrical voltage U drawn from the electrical voltage source such that an electrical current I flows between the anode and cathode, the ratio Q of the current strength of the electrical current I and the area A of the membrane being between 100 A/m$^2$ and 500 A/m$^2$ or between 150 A/m$^2$ and 350 A/m$^2$;
   j) withdrawing from the first compartment of wastewater comprising at least water, Li salts dissolved therein, oxygen and also impurities, the concentration of Li ions in the wastewater Cw, based on the total weight of the wastewater, being lower than the concentration of Li ions in the feed $C_F$;
   k) withdrawing from the second compartment of a rich working medium comprising water and lithium hydroxide and also hydrogen, the concentration of lithium hydroxide in the rich working medium $C_{M1}$, based on the total weight of the rich working medium, being greater than the concentration of lithium hydroxide in the poor working medium $C_{M0}$.

2. Process according to Claim 1, **characterized in that** the basic compound is selected from the group consisting of $Ca(OH)_2$, KOH, NaOH, LiOH and $NH_4OH$.

3. Process according to Claim 2, **characterized in that** the basic compound is $Ca(OH)_2$.

4. Process according to Claim 1, 2 or 3, **characterized in that** the pH of the intermediate, measured using a glass electrode at 25°C, is between 9 and 12.

5. Process according to any of Claims 1 to 4, **characterized in that** the anions present in the feed are selected from the group consisting of sulfate, carbonate, hydroxide, chloride and fluoride.

6. Process according to any of Claims 1 to 5, **characterized in that** the feed contains impurities in the form of compounds of elements selected from the group consisting of B, Na, Mg, Al, Si, K, Ca, Mn, Fe, Co, Ni, Cu and C.

7. Process according to any of the preceding claims, wherein the inorganic material present in the membrane possesses a specific conductivity for Li ions $\sigma$, measured by the "impedance spectroscopy" method described herein, that at a temperature of 23°C is at least $1*10^{-5}$ S/m or at least $5*10^{-5}$ S/m or at least $10*10^{-5}$ S/m and not more than $100*10^{-5}$ S/m.

8. Process according to Claim 7, **characterized in that** the inorganic material is a compound of the following stoichiometry (LATP):

$$Li_{1+x}Al_xTi_{2-x}(PO_4)_3$$

in which: $0.1 \leq x \leq 0.3$, where preferably $x = 0.3$.

9. Process according to Claim 7, **characterized in that** the inorganic material is a compound of the following stoichiometry (LATSP):

$$Li_{1+x+y}Al_xTi_{2-x}Si_yP_{3-y}O_{12}$$

in which: $0.1 \leq x \leq 0.3$ and $0.2 \leq y \leq 0.4$.

10. Process according to Claim 7, **characterized in that** the inorganic material is a compound of the following stoichiometry (LAGTSP):

$$Li_{1+x+y}Al_xTi_{2-x}Si_yP_{3-y}O_{12} * nGeO_2$$

in which: $0 \leq x \leq 1$ and $0 \leq y \leq 1$ and $0 \leq n \leq 1$.

11. Process according to Claim 7, **characterized in that** the inorganic material is a compound of the following stoichiometry (LAGTP):

$$Li_{1.4}Al_{0.4}(Ge_{1-x}Ti_x)_{1.6}(PO_4)_3$$

in which: $0 \leq x \leq 1$.

12. Process according to Claim 7, **characterized in that** the inorganic material is a compound of the following stoichiometry (LAGP):

$$Li_{1+x}Al_xGe_{2-x}(PO_4)_3$$

in which: $x = 0$ or $x = 0.2$ or $x = 0.4$.

13. Process according to Claim 7, **characterized in that** the inorganic material is a compound of the following stoichiometry (LLTO):

$$Li_{3x}La_{(2/3) -x}\square_{(1/3) -2x}TiO_3$$

in which: $0 \leq x \leq 0.16$.

14. Process according to any of the preceding claims, comprising the additional steps of:

   m) providing a separation apparatus;
   n) separating lithium hydroxide from the rich working medium with the aid of the separation apparatus.

15. Process according to Claim 14, **characterized in that** the step of

   n) separating lithium hydroxide from the rich working medium with the aid of the separation apparatus; affords the poor working medium,
   such that the step of
   b) providing a poor working medium comprising water and lithium hydroxide dissolved therein, the concentration of lithium hydroxide in the poor working medium $C_{M0}$, based on the total weight of the poor working medium, being at least 50 ppm by weight;
   takes place with the aid of the separation apparatus.

16. Process according to Claim 14 or 15, **characterized in that** the electrochemical cell and the separation apparatus are provided in the same location.

17. Process according to any of Claims 1 to 16, **characterized in that** at least the electrochemical cell is operated continuously.

18. Process according to any of Claims 1 to 17, **characterized in that** the production of hydrogen and lithium hydroxide take place simultaneously.

19. Process according to any of the preceding Claims 1 to 18, **characterized in that** the electrical voltage drawn from the electrical voltage source changes periodically over time.

20. Process according to Claim 19, **characterized in that** the electrical voltage drawn from the electrical voltage source changes over time in a waveform-like manner, the waveform being selected from the group consisting of the following waveforms: sine, rectangle, triangle or sawtooth.

21. Process according to Claim 20, wherein the waveform is rectangular, that is to say formed from a first wave section in which the voltage is switched on at a constant value and, following on from the first wave section, a second wave section in which the voltage is switched off, where the length of the first wave section is $\lambda_1$, where the length of the second wave section is $\lambda_2$ and where the following relationship applies: $\lambda_1 = \phi^* \lambda_2$ where $3 < \phi < 7$.

22. Process according to Claim 19, 20 or 21, **characterized in that** the polarity of the electrical voltage is maintained.

23. Process according to any of Claims 1 to 22, **characterized in that** the prevailing pH in both the first compartment and the second compartment, measured at 25°C with a glass electrode, is from 9 to 13.

## Revendications

1. Procédé pour la production d'hydrogène et d'hydroxyde de lithium, comportant les étapes suivantes :

   a) disposition d'une charge contenant au moins de l'eau, des cations Li, des anions, ainsi que des impuretés, la concentration de cations Li dans la charge $C_F$ étant d'au moins 200 ppm en poids ou comprise entre 500 ppm en poids et 140 000 ppm en poids, chaque fois par rapport au poids total de la charge, le pH de la charge, mesuré à 25 °C au moyen d'électrode en verre, étant compris entre 2 et 9 ;
   b) disposition d'un fluide de travail pauvre contenant de l'eau et de l'hydroxyde de lithium dissous dans celle-ci, la concentration d'hydroxyde de lithium dans le fluide de travail pauvre $C_{M0}$ étant d'au moins 50 % en poids par rapport au poids total du fluide travail pauvre

c) disposition d'un composé basique ;

d) disposition d'au moins une cellule électrochimique, la cellule électrochimique présentant les caractéristiques suivantes :

i. la cellule électrochimique comprend un premier compartiment, dans lequel est disposée une anode ;

ii. la cellule électrochimique comprend un second compartiment, dans lequel est disposée une cathode ;

iii. la cellule électrochimique comprend une membrane qui sépare le premier compartiment du second compartiment, la membrane présentant la surface A ;

iv. la membrane contient une substance inorganique qui possède une conductivité pour les ions Li et qui est électriquement isolante ;

e) disposition d'au moins une source de tension électrique, qui est reliée à l'anode par une première ligne électrique et à la cathode par une seconde ligne électrique ;

f) addition dosée du composé basique à la charge, de sorte qu'un fluide intermédiaire est obtenu, le pH du fluide intermédiaire, mesuré à 25 °C au moyen d'électrode en verre, valant entre 9 et 13.

g) charge du premier compartiment avec le fluide intermédiaire ;

h) charge du second compartiment avec le fluide de travail pauvre ;

i) alimentation de la cellule électrochimique avec une tension électrique U fournie par la source de tension électrique, de sorte qu'un courant électrique *I* circule entre anode et cathode, le quotient Q de l'intensité de courant du courant électrique *I* et de la surface A de la membrane étant compris entre 100 A/m$^2$ et 500 A/m$^2$ ou entre 150 A/m$^2$ et 350 A/m$^2$ ;

j) décharge hors du premier compartiment d'eau résiduaire contenant au moins de l'eau, des sels de Li dissous dans celle-ci, de l'oxygène, ainsi que des impuretés, la concentration d'ions Li dans l'eau résiduaire $C_W$ par rapport au poids total de l'eau résiduaire étant plus faible que la concentration d'ions Li dans la charge $C_F$ ;

k) décharge hors du second compartiment d'un fluide de travail riche contenant de l'eau et de l'hydroxyde de lithium ainsi que de l'hydrogène, la concentration d'hydroxyde de lithium dans le fluide de travail riche $C_{M1}$ par rapport au poids total du fluide de travail riche étant plus élevée que la concentration d'hydroxyde de lithium dans le fluide de travail pauvre $C_{M0}$.

2. Procédé selon la revendication 1, **caractérisé en ce que** le composé basique est choisi dans le groupe constitué par $Ca(OH)_2$, $KOH$, $NaOH$, $LiOH$, $NH_4OH$.

3. Procédé selon la revendication 2, **caractérisé en ce que** pour ce qui est du composé basique il s'agit de $Ca(OH)_2$.

4. Procédé selon la revendication 1, 2 ou 3, **caractérisé en ce que** le pH du fluide intermédiaire, mesuré à 25 °C au moyen d'électrode en verre, est compris entre 9 et 12.

5. Procédé selon l'une quelconque des revendications 1 à 4, **caractérisé en ce que** les anions contenus dans la charge sont choisis dans le groupe constitué par les anions sulfate, carbonate, hydroxyde, chlorure, fluorure.

6. Procédé selon l'une quelconque des revendications 1 à 5, **caractérisé en ce que** la charge contient des impuretés sous forme de composés d'éléments qui sont choisis dans le groupe constitué par B, Na, Mg, Al, Si, K, Ca, Mn, Fe, Co, Ni, Cu, C.

7. Procédé selon l'une quelconque des revendications précédentes, dans lequel la substance inorganique contenue dans la membrane possède une conductivité spécifique pour les ions Li $\sigma$, mesurée selon la méthode « spectroscopie d'impédance » décrite dans le présent document, qui, à une température de 23 °C, est d'au moins $1*10^{-5}$ S/m ou d'au moins $5*10^{-5}$ S/m ou d'au moins $10*10^{-5}$ S/m et d'au maximum $100*10^{-5}$ S/m

8. Procédé selon la revendication 7, **caractérisé en ce que** pour ce qui est de la substance inorganique il s'agit d'un composé de stoechiométrie suivante (LATP) :

$$Li_{1+x}Al_xTi_{2-x}(PO_4)_3$$

dans laquelle il s'applique que : $0,1 \leq x \leq 0,3$, x étant de préférence égal à 0,3.

9. Procédé selon la revendication 7, **caractérisé en ce que** pour ce qui est de la substance inorganique il s'agit d'un composé de stoechiométrie suivante (LATSP) :

$$Li_{1+x+y}Al_xTi_{2-x}Si_yP_{3-y}O_{12}$$

dans laquelle il s'applique que : $0,1 \leq x \leq 0,3$ et $0,2 \leq y \leq 0,4$.

10. Procédé selon la revendication 7, **caractérisé en ce que** pour ce qui est de la substance inorganique il s'agit d'un composé de stoechiométrie suivante (LAGTSP) :

$$Li_{1+x+y}Al_xTi_{2-x}Si_yP_{3-y}O_{12} * nGeO_2$$

dans laquelle il s'applique que : $0 \leq x \leq 1$ et $0 \leq y \leq 1$ et $0 \leq n \leq 1$.

11. Procédé selon la revendication 7, **caractérisé en ce que** pour ce qui est de la substance inorganique il s'agit d'un composé de stoechiométrie suivante (LAGTP) :

$$Li_{1.4}Al_{0.4}(Ge_{1-x}Ti_x)_{1.6}(PO_4)_3$$

dans laquelle il s'applique que : $0 \leq x \leq 1$.

12. Procédé selon la revendication 7, **caractérisé en ce que** pour ce qui est de la substance inorganique il s'agit d'un composé de stoechiométrie suivante (LAGP) :

$$Li_{1+x}Al_xGe_{2-x}(PO_4)_3$$

dans laquelle il s'applique que : $x = 0,2$ ou $x = 0,4$.

13. Procédé selon la revendication 7, **caractérisé en ce que** pour ce qui est de la substance inorganique il s'agit d'un composé de stoechiométrie suivante (LLTO) :

$$Li_{3x}La_{(2/3)-x}\square_{(1/3)-2x}TiO_3$$

dans laquelle il s'applique que : $0 \leq x \leq 0,16$.

14. Procédé selon l'une quelconque des revendications précédentes, comportant les étapes supplémentaires :

m) disposition d'un appareil de séparation ;
n) séparation d'hydroxyde de lithium à partir du fluide de travail riche à l'aide de l'appareil de séparation.

15. Procédé selon la revendication 14, **caractérisé en ce que** dans l'étape

n) séparation d'hydroxyde de lithium à partir du fluide de travail riche à l'aide de l'appareil de séparation ; le fluide de travail pauvre est obtenu
de sorte que l'étape
b) disposition d'un fluide de travail pauvre contenant de l'eau et de l'hydroxyde de lithium dissous dans celle-ci, la concentration d'hydroxyde de lithium dans le fluide de travail pauvre $C_{M0}$ étant d'au moins 50 % en poids par rapport au poids total du fluide de travail pauvre ;
s'effectue à l'aide de l'appareil de séparation.

16. Procédé selon la revendication 14 ou 15, **caractérisé en ce que** la cellule électrochimique et l'appareil de séparation sont disposé au même lieu.

17. Procédé selon l'une quelconque des revendications 1 à 16, **caractérisé en ce qu'**au moins la cellule électrochimique est en fonctionnement continu.

18. Procédé selon l'une quelconque des revendications 1 à 17 , **caractérisé en ce que** la production d'hydrogène et d'hydroxyde de lithium s'effectue simultanément.

**19.** Procédé selon l'une quelconque des revendications 1 à 18 , **caractérisé en ce que** la tension électrique fournie par la source de tension électrique varie périodiquement au cours du temps.

**20.** Procédé selon la revendication 19, **caractérisé en ce que** la tension électrique fournie par la source de tension électrique varie de façon ondulatoire au cours du temps, la forme d'onde étant choisie parmi les formes d'ondes suivantes : sinusoïdale, rectangulaire, triangulaire, en dent de scie.

**21.** Procédé selon la revendication 20, dans lequel la forme d'onde est rectangulaire, à savoir constituée d'une première partie d'onde dans laquelle la tension est mis en circuit avec une valeur constante, et d'une seconde partie d'onde faisant suite à la première partie d'onde, dans laquelle la tension est mise hors circuit, la longueur de la première partie d'onde étant $\lambda_1$, la longueur de la seconde partie d'onde étant $\lambda_2$ et où il s'applique que $\lambda_1 = \phi^* \lambda_2$ avec $3 < \phi < 7$.

**22.** Procédé selon la revendication 19 ou 20, **caractérisé en ce que** la polarité de la tension électrique est conservée.

**23.** Procédé selon l'une quelconque des revendications 1 à 22, **caractérisé en ce qu'**aussi bien dans le premier compartiment que dans le second compartiment règne un pH de 9 à 13 ; pH mesuré à 25 °C à l'aide d'électrode en verre.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

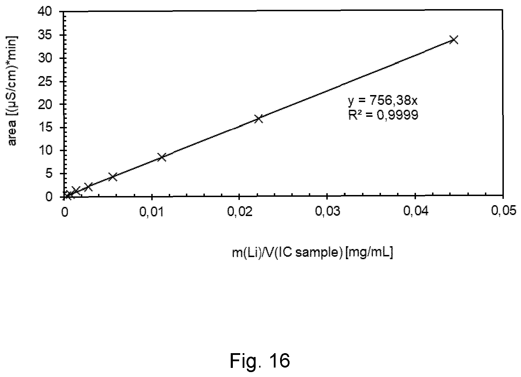

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160201163 A1
- WO 2019055730 A1
- US 9222148 B2
- EP 3805428 A1
- US 2012103826 A
- US 10036094 B2

**In der Beschreibung aufgeführte Nicht-Patentliteratur**

- Lithium and Lithium Compounds. **WIETELMANN, U.** ; **STEINBILD, M.** Ullmann's Encyclopedia of Industrial Chemistry. 2014
- **PANKAJ K. CHOUBEY et al.** Advance review on the exploitation of the prominent energystorage element Lithium. Part II: From sea water and spent lithium ion batteries (LIBs). *Minerals Engineering*, 2017, vol. 110, 104121
- **PALAKKATHODI KAMMAMPATA et al.** Cruising in ceramics-discovering new structures for all-solid-state batteries-fundamentals, materials, and performances. *Ionics*, 2018, vol. 24, 639-660
- **YEDUKONDALU MEESALA et al.** Recent Advancements in Li-Ion Conductors for All-Solid-State Li-Ion Batteries. *ACS Energy Lett.*, 2017, vol. 2, 12, 2734-2751
- **SOFIA SAFFIRIO et al.** Li1.4Al0.4Ge0.4Ti1.4(PO4)3 promising NASICON-structured glass-ceramic electrolyte for all-solid-state Li-based batteries: Unravelling the effect of diboron trioxide. *Journal of the European Ceramic Society*, 2022, vol. 42 (3), 1023-1032
- **EONGYU YI et al.** Materials that can replace liquid electrolytes in Li batteries: Superionic conductivities in Li1.7Al0.3Ti1.7Si0.4P2.6O12. Processing combustion synthesized nanopowders to free standing thin films. *Journal of Power Sources*, 2014, vol. 269, 577-588
- **ZHEN LI et al.** Continuous electrical pumping membrane process for seawater lithium mining. *Energy Environ. Sci.*, 2021, vol. 14, 3152
- **SIXIE YANG et al.** Lithium Metal Extraction from Seawater. *Joule*, 2018, vol. 2 (9), 1648-1651
- Analytik: Daten, Formeln, Übungsaufgaben. Walter de Gruyter GmbH & Co. KG, 2019, 257f